# EUROPEAN PATENT SPECIFICATION

(11) **EP 4 027 688 B1**
(45) Date of publication and mention of the grant of the patent: **27.11.2024**
(21) Application number: 20870230.8
(22) Date of filing: 22.07.2020
(51) Int. Cl.: H04W 24/04, H04W 80/08, H04W 24/02, H04L 12/46, H04L 41/0806, H04L 41/08, H04L 41/12

(54) **BASE STATION AUTOMATICALLY GENERATING A VIRTUAL LOCAL AREA NETWORK IDENTIFIER**
EINE BASISSTATION GENERIERT AUTOMATISCH EINE IDENTIFIZIERUNG FÜR EIN VIRTUELLES LOKALES NETZWERK
STATION DE BASE GÉNÉRANT AUTOMATIQUEMENT UN IDENTIFIANT DE RÉSEAU LOCAL VIRTUEL

(30) Priority: 27.09.2019 CN 201910925492
(43) Date of publication of application: 13.07.2022
(73) Proprietor: Huawei Technologies Co., Ltd., Longgang District Shenzhen, Guangdong 518129 (CN)
(72) Inventor: XUE, Wan, Shenzhen, Guangdong 518129 (CN)
(74) Representative: Pfenning, Meinig & Partner mbB
(86) International application number: PCT/CN2020/103438
(87) International publication number: WO 2021/057217

(56) References cited:
- WO-A1-2008/020732
- CN-A- 1 611 038
- CN-A- 104 618 942
- CN-A- 106 789 655
- CN-A- 110 061 871
- US-A1- 2014 119 354
- US-A1- 2015 006 689
- O-RAN FRONTHAUL WORKING GROUP 4: "Management Plane Specification", INTERNET CITATION, 3 July 2019 (2019-07-03), pages 1 - 149, XP009527537, Retrieved from the Internet <URL:https://www.o-ran.org/specification-access>
- "3rd Generation Partnership Project; Technical Specification Group Services and System Aspects; Telecommunication management; Self-configuration of network elements; Concepts and requirements (Release 15)", 3GPP STANDARD; TECHNICAL SPECIFICATION; 3GPP TS 32.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V15.0.0, 27 June 2018 (2018-06-27), pages 1 - 29, XP051474376
- NORDMARK E: "IP over Intentionally Partially Partitioned Links; draft-ietf-intarea-ippl-00.txt", IP OVER INTENTIONALLY PARTIALLY PARTITIONED LINKS; DRAFT-IETF-INTAREA-IPPL-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 30 March 2017 (2017-03-30), pages 1 - 16, XP015119038

## Description

### TECHNICAL FIELD

This application relates to the communication field, and in particular, to a communication method, a base station, and a communication system.

### BACKGROUND

Document O-RAN FRONTHAUL WORKING GROUP 4, "Management Plane Specification", INTERNET CITATION, (20190703), pages 1 - 149, URL: https://www.o-ran.org/specification-access, XP009527537 discloses a management plane specification.

Document CN 106 789 655 A discloses a router advertise packet sending method and apparatus.

Document US 2014/119354 A1 discloses a method and network device for home VLAN identification for roaming mobile clients.

In the field of mobile communication, operators construct networks by using networking technologies, and provide network services for users based on the networks. An internet protocol radio access network (Internet Protocol Radio Access Network, IPRAN) is used as an example. Each base station transmits a different local IP of a management plane (Management Plane, MP), local IP of a control plane (Control Plane, CP), local IP of a user plane (User Plane, UP), and local IP of an internet key exchange (Internet Key Exchange, IKE), and a transmission bearer network is different. In addition, each base station has a different virtual local area network (Virtual Local Area Network, VLAN), interface IP, and route on a transmission side of the base station. Therefore, a customer needs to perform planning and configuration for each base station, resulting in high time costs and labor costs.

When transmission of the transmission bearer network is adjusted, base station transmission should also be replanned and adjusted. MP-related parameters may be automatically configured by using a dynamic host configuration protocol (Dynamic Host Configuration Protocol, DHCP), but other parameters still need to be manually configured.

Based on this, a method for adaptively configuring a base station is provided, to improve configuration efficiency and reduce configuration costs.

### SUMMARY

The invention is set out in the appended set of claims. In view of this, this application provides a communication method, a base station, and a communication system according to the independent claims, to implement automatic transmission configuration of a base station in an adaptive manner after transmission network configuration is completed, so that base station transmission planning and station-by-station configuration by a network management system are avoided. This improves configuration efficiency and reduces configuration costs.

A first aspect of embodiments of this application provides a communication method. The method comprises: receiving a router advertisement (RA) packet from a router, and generating a virtual local area network identifier (VLAN ID), an interface network address (Interface IP), and a route based on the router advertisement packet; obtaining association information of an upper-layer service, wherein the upper-layer service comprises a management plane service, a control plane service, and a user plane service; and determining a virtual local area network and a network address of the upper-layer service based on the association information; wherein the method further comprises: establishing a management channel connection between the base station and a network management system; and the obtaining association information of an upper-layer service comprises: obtaining the association information of the upper-layer service from the network management system based on the management channel connection; wherein the association information comprises a virtual local area network usage rule for the base station; and the determining a virtual local area network and a network address of the upper-layer service based on the association information comprises: determining the virtual local area network and the network address of the upper-layer service according to the virtual local area network usage rule for the base station and based on the virtual local area network identifier and the interface network address that are generated in advance; wherein the generating a virtual local area network identifier, an interface network address, and a route based on the router advertisement packet comprises: automatically generating the virtual local area network identifier based on a virtual local area network identifier of the router advertisement packet received through a physical port; and automatically generating a global unicast address as the interface network address by using an internet protocol version 6, IPv6, stateless address autoconfiguration mechanism based on a network address prefix carried in the router advertisement packet. The upper-layer service is specifically a service above a network layer (namely an L3 layer) layered according to a transmission control protocol/internet protocol (Transmission Control Protocol/Internet Protocol, TCP/IP), and includes an MP service, a CP service, and a UP service. In some cases, for example, in a security scenario, the upper-layer service may further include an IKE service.

It may be understood that, in the method, a transmission side of the base station performs self-learning based on the received RA packet and the obtained association information to generate a transmission-related parameter. In this way, base station transmission planning is not required, and configuration personnel do not need to configure transmission station by station. This improves configuration efficiency and reduces configuration labor costs and time costs. In addition, the method further implements decoupling of transmission network transmission and base station transmission, and decoupling of construction and the transmission network. To be specific, the base station can adapt to transmission network reconstruction, and when configuring the base station, construction personnel do not need to pay attention to a transmission network port connected to the base station.

The base station establishes a management channel connection between the base station and a network management system. In this way, the network management system may deliver the association information of the upper-layer service to the base station by using the management channel connection, to indicate the base station to perform upper-layer service configuration based on the association information.

The foregoing association information may be specifically a VLAN usage rule for the base station, a VLAN usage may be understood as a service applicable to a VLAN, and the VLAN usage rule indicates how to classify the VLAN usage. For example, the VLAN usage may be classified based on a size of a VLAN ID or a last digit of the VLAN ID. The base station may identify, based on the foregoing VLAN usage rule and a VLAN ID generated in advance, a usage of a VLAN identified by each VLAN ID, for example, one upper-layer service or some upper-layer services to which the VLAN is applicable. In this way, the base station may first determine the VLAN of the upper-layer service, and then the base station may determine an interface IP corresponding to the VLAN ID of the VLAN of the upper-layer service as the IP of the upper-layer service based on a correspondence between the VLAN ID and the interface IP that are generated in advance.

Certainly, the foregoing association information may further include a correspondence between the upper-layer service and a virtual local area network interface (VLAN interface). For example, the MP service corresponds to a VLAN interface 1, the CP service corresponds to a VLAN interface 2, and the UP service corresponds to a VLAN interface 3. The base station may first determine the VLAN of the upper-layer service according to the VLAN usage rule for the base station and based on the VLAN identifier generated in advance. For example, the VLAN usage rule indicates to determine VLANs of the MP service, the CP service, and the UP service in ascending order of VLAN IDs. If the VLAN IDs generated based on the RA packet include 100, 200, and 300, the base station may determine, based on the foregoing information, that the VLAN of the MP service is a VLAN identified by 100, the VLAN of the CP service is a VLAN identified by 200, and the VLAN of the UP service is a VLAN identified by 300. Then, a VLAN interface corresponding to the VLAN of the upper-layer service may be determined based on the VLAN of the upper-layer service and the correspondence between the upper-layer service and the VLAN interface, and an interface IP generated on the VLAN interface in advance is determined as the IP of the upper-layer service. The MP service is used as an example. The MP service corresponds to the VLAN interface 1 and the VLAN identified by 100. Therefore, the base station may determine an IP automatically generated on the VLAN interface 1 as an IP of the MP service. IPs of other upper-layer services such as the CP service and the UP service may be deduced by analogy. Details are not described herein again.

In a second implementation of the first aspect of embodiments of this application, the base station may be deployed in a plug and play (Plug and Play, PnP) manner. In this case, because the base station and the network management system do not perceive an MP IP of each other, the base station and the network management system may send a DHCP multicast packet, and a router uses a dynamic host configuration protocol (Dynamic Host Configuration Protocol, DHCP) relay to convert the multicast packet into a unicast packet, so that the base station and the network management system exchange an MP IP of a peer end. The base station may establish the management channel connection between the base station and the network management system based on the MP IP of the peer end.

In a third implementation of the first aspect of embodiments of this application, when the base station and the network management system exchange an MP IP in a DHCP relay manner, the base station may notify the network management system of an MP IP of the base station, or the network management system may notify the base station of an MP IP of the network management system.

Specifically, the base station may include the interface IP generated based on the RA packet as a temporary MP IP in a DHCP request multicast packet, and then send a corresponding DHCP request multicast packet for each VLAN interface, so that a router converts the DHCP request multicast packet into a request unicast packet by using a DHCP relay, and the base station sends the request unicast packet to the network management system. In this way, the base station notifies the network management system of the MP IP of the base station. In actual application, the base station may include a base station identifier of the base station and the MP IP of the base station in an option field (Option) of the DHCP request multicast packet.

Certainly, the base station may alternatively send a DHCP request multicast packet, wait for a response packet sent by the network management system, and learn the MP IP of the network management system from the response packet. Specifically, the base station may send a DHCP request multicast packet for each VLAN interface, so that a router converts the DHCP request multicast packet into a request unicast packet by using a DHCP relay, and the base station sends the request unicast packet to the network management system. An option field of the DHCP request multicast packet carries a base station identifier. When the network management system receives the unicast packet that is converted from the DHCP request multicast packet by using the DHCP relay, the network management system generates a DHCP response unicast packet. An option field of the response unicast packet carries the MP IP of the network management system. Then, the network management system sends the response unicast packet, the router converts the response unicast packet into a response multicast packet by using the DHCP relay, and the network management system sends the response multicast packet to the base station. In this way, the network management system notifies the base station of the MP IP of the network management system.

In a fourth implementation of the first aspect of embodiments of this application, the network management system may be further configured as a domain name system server (Domain Name System Server, DNS Server). In this way, when an MP IP of the network management system is configured as a DNS server address, that is, when a DNS server address field in the RA packet is configured as the MP IP of the network management system, the base station may obtain the MP IP of the network management system by accessing the DNS server. Then, the base station establishes the management channel connection between the base station and the network management system based on the MP IP of the network management system.

In a fifth implementation of the first aspect of embodiments of this application, the base station may further establish the management channel connection between the base station and the network management system based on a preset MP IP of the network management system.

In a sixth implementation of the first aspect of embodiments of this application, the preset management plane network address may be specifically a management plane network address that is of the network management system and that is preset when the base station is at delivery, or a management plane network address that is of the network management system and that is configured in a local connection manner. The local connection manner may specifically include inserting a universal serial bus (Universal Serial Bus, USB) flash disk, a memory card, Bluetooth, Wi-Fi, or the like.

In a seventh implementation of the first aspect of embodiments of this application, in a local deployment scenario, the base station serves as a server, the network management system serves as a client, and the client does not know an MP IP of the server. In this case, the base station may enable a DHCP relay, where a service address of the DHCP relay is an MP IP of the network management system. Then, the base station sends a DHCP-based multicast packet, and converts the multicast packet into a unicast packet by using the DHCP relay, so that the network management system initiates a management channel connection establishment request based on an MP IP of the base station carried in an option field of the unicast packet. The base station establishes the management channel connection between the base station and the network management system in response to the management channel connection establishment request. In some embodiments, the base station serves as a server, and the network management system serves as a client. The base station may alternatively send a DHCP-based request unicast packet directly to the network management system without performing relay by using a DHCP relay. An option field of the request unicast packet carries a base station identifier and an MP IP of the base station. In this way, the client may learn the MP IP of the server, the network management system serving as the client may initiate a management channel connection establishment request based on the MP IP of the server, and the base station serving as the server establishes the management channel connection between the base station and the network management system in response to the management channel connection establishment request.

In an eighth implementation of the first aspect of embodiments of this application, a switch or router connected to the base station may advertise a message to notify the base station of a VLAN usage. For example, a user may configure a link layer discovery protocol (Link Layer Discovery Protocol, LLDP) packet on the switch or router connected to the base station. The LLDP packet includes a VLAN ID field and a service field. The service field may be generated by filling a service in a virtual local area network name (VLAN name) field or a custom field. In this way, the base station may further receive the LLDP packet, and determines the association information of the upper-layer service based on the VLAN ID field and the service field in the LLDP packet. The association information may be specifically an upper-layer service applicable to a VLAN identified by the VLAN ID field. In this way, the base station may determine the VLAN and the IP of the upper-layer service based on the upper-layer service applicable to the VLAN identified by the VLAN ID field, and the VLAN ID and the interface IP that are generated in advance.

In a ninth implementation of the first aspect of embodiments of this application, in a security scenario, the upper-layer service further includes an internet key exchange (Internet key exchange, IKE) service. Correspondingly, the association information includes a virtual local area network usage rule and an address allocation message that are delivered by the network management system for the base station by using the management channel connection, and the address allocation message includes a management plane network address, a control plane network address, and a user plane network address. The addresses are specifically allocated by the network management system to the base station based on respective address pools corresponding to the MP service, the CP service, and the UP service. In this way, the base station may first determine a VLAN and an IP of the IKE service according to the virtual local area network usage rule for the base station and based on the VLAN ID and the interface IP that are generated in advance. Then, the MP IP, the CP IP, and the UP IP are determined based on the address allocation message. The MP IP, the CP IP, and the UP IP are encapsulated in an inner layer, and MP IPs, CP IPs, and UP IPs of different base stations may be located in a same network segment. Therefore, an address pool needs to be configured only once for a plurality of base stations mounted to the network management system, and station-by-station configuration is not needed. This improves configuration efficiency and reduces configuration costs.

In a tenth implementation of the first aspect of embodiments of this application, it is considered that a physical port may be in a false enabled (false up state, specifically, a local end is up and a peer end is down) status. In this case, the base station may further determine first, in a self-detection manner, whether the physical port of the base station is in a false up state. Specifically, the base station may send a probe request packet such as a neighbour solicitation (Neighbour Solicitation, NS) packet or a router solicitation (Router Solicitation, RS) packet, and wait for a response probe advertisement packet such as a neighbour advertisement (Neighbour Advertisement, NA) packet or an RA packet to determine whether the physical port is falsely up.

If the probe advertisement packet is received, it indicates that the physical port of the base station is not falsely up, and the base station may stop probe. If no probe advertisement packet is received, it indicates that the port is currently in a false up state. The base station may update a negotiation mode and a negotiation rate of the physical port, and then continue to perform probe until the probe advertisement packet is received.

The base station automatically generates the VLAN ID based on a VLAN ID of the RA packet received through the physical port. Then, the base station automatically generates a global unicast address as the interface IP based on a network address prefix IP/Prefix of the RA packet. During specific implementation, the base station automatically generates the interface IP by using a stateless address autoconfiguration mechanism.

In a twelfth implementation of the first aspect of embodiments of this application, the base station may generate the route by using any one of the following two solutions. In one solution, the base station configures different virtual routing and forwarding (Virtual Routing and Forwarding, VRF) for each VLAN interface for isolation, and generates a default route for each VRF. Specifically, the base station may determine corresponding VRF based on the VLAN identifier of the RA packet or a physical port identifier corresponding to the physical port that receives the RA packet, and generates a default route for each VRF. In some cases, the default route is also called a default routing, and specifically refers to a route that can be selected when there is no matching entry between a routing table and a destination address of the packet. Based on this, a destination address of the default route can be set to : :0/0, to successfully match any destination address. A next-hop address of the default route may be set as a source address of the RA packet. In the other solution, a source address is used to replace a destination address for route selection. Specifically, the base station uses the interface IP automatically generated for the virtual local area network interface as the source address, and uses a source address of the RA packet as a next-hop address of a source address route, to generate the source address route.

A second aspect, which is not an embodiment of the present invention but helpful for understanding certain aspects thereof, provides a communication method. The method may be specifically performed by a network management system. Specifically, the network management system establishes a management channel connection to a base station, and then delivers association information of an upper-layer service to the base station by using the management channel connection. The upper-layer service includes a management plane service, a control plane service, and a user plane service, and the association information is used by the base station to determine a virtual local area network and a network address of the upper-layer service.

The network management system provides the association information for the base station, so that the base station performs self-learning, to generate a transmission-related parameter. In this way, base station transmission planning is not required, and configuration personnel do not need to configure transmission station by station. This improves configuration efficiency and reduces configuration labor costs and time costs.

In a first implementation of the second aspect, the network management system may exchange a management plane network address of a peer end with the base station by converting a multicast packet into a unicast packet by using a dynamic host configuration protocol relay. Then, the network management system establishes the management channel connection to the base station based on the management plane network address of the peer end. According to the method, the management channel connection can be automatically established, to reduce labor costs.

Specifically, the base station may notify the network management system of a management plane network address of the base station, to establish the management channel connection between the base station and the network management system. Alternatively, the network management system may notify the base station of a management plane network address of the network management system, to establish the management channel connection between the base station and the network management system.

In some implementations, the network management system may receive a request unicast packet. The request unicast packet is generated by a router by converting a dynamic host configuration protocol request multicast packet by using the dynamic host configuration protocol relay. The dynamic host configuration protocol request multicast packet is sent by the base station for each virtual local area network interface. An option field of the dynamic host configuration protocol request multicast packet carries a base station identifier of the base station and a management plane network address of the base station. In this way, the base station notifies the network management system of the management plane network address of the base station.

In some other implementations, the network management system may receive a request unicast packet. The request unicast packet is generated by a router by converting a dynamic host configuration protocol request multicast packet by using a dynamic host configuration protocol relay. The dynamic host configuration protocol request multicast packet is sent by the base station for each virtual local area network interface. An option field of the dynamic host configuration protocol request multicast packet carries a base station identifier of the base station. Then, the network management system sends a dynamic host configuration protocol response unicast packet. The dynamic host configuration protocol response unicast packet is converted by a router by using the dynamic host configuration protocol relay to obtain a response multicast packet. An option field of the response multicast packet carries a management plane network address of the network management system. In this way, the network management system notifies the base station of the management plane network address of the network management system.

In a second implementation of the second aspect, in a local deployment scenario, the base station serves as a server, and the network management system may further receive a unicast packet. An option field of the unicast packet carries a management plane network address of the base station. The unicast packet is obtained by the base station by enabling a dynamic host configuration protocol relay and converting a dynamic host configuration protocol-based multicast packet or is directly generated by the base station. Then, the network management system sends a management channel connection establishment request to the base station based on the management plane network address of the base station. The management channel connection is automatically established, so that base station transmission planning is not required.

A third aspect of embodiments of this application provides a communication apparatus configured to perform the method according to the first aspect. The apparatus includes an obtaining unit and a processing unit. The obtaining unit is configured to receive a router advertisement packet. The processing unit is configured to generate a virtual local area network identifier, an interface network address, and a route based on the router advertisement packet. The obtaining unit is further configured to obtain association information of an upper-layer service, where the upper-layer service includes a management plane service, a control plane service, and a user plane service. The processing unit is further configured to determine a virtual local area network and a network address of the upper-layer service based on the association information.

The processing unit is further configured to establish a management channel connection between a base station and a network management system. In this way, the obtaining unit may obtain the association information of the upper-layer service from the network management system based on the management channel connection.

The association information obtained by the obtaining unit from the network management system may alternatively be a virtual local area network usage rule for the base station. In this way, the processing unit may determine the virtual local area network and the network address of the upper-layer service according to the virtual local area network usage rule for the base station and based on the virtual local area network identifier and the interface network address that are generated in advance.

Certainly, the association information obtained by the obtaining unit from the network management system may further include a correspondence between the upper-layer service and a virtual local area network interface. In this way, the processing unit may determine the virtual local area network of the upper-layer service according to the virtual local area network usage rule for the base station and based on the virtual local area network identifier generated in advance. The processing unit may determine a virtual local area network interface corresponding to the virtual local area network of the upper-layer service based on the virtual local area network of the upper-layer service and the correspondence between the upper-layer service and the virtual local area network interface, and determine the interface network address generated on the virtual local area network interface in advance as the network address of the upper-layer service.

In a first implementation of the third aspect of embodiments of this application, the processing unit may establish the management channel connection based on a management plane network address of a peer end. The management plane network address of the peer end may be obtained by using a DHCP relay for the packet.

It should be noted that the apparatus may further include a sending unit. The sending unit may actively send a management plane network address of a local end to the network management system. In other words, the base station notifies the network management system of an MP IP of the base station. Alternatively, the obtaining unit may receive a management plane network address of the network management system sent by the network management system. In other words, the network management system notifies the base station of an MP IP of the network management system.

In an example, the sending unit may send a dynamic host configuration protocol request multicast packet for each virtual local area network interface. An option field of the dynamic host configuration protocol request multicast packet carries a base station identifier of the base station and a management plane network address of the base station. The management plane network address of the base station is the interface network address generated based on a router solicitation packet and that corresponds to the virtual local area network identifier. In this way, the base station notifies the network management system of the MP IP of the base station.

In another example, the sending unit may send a dynamic host configuration protocol request multicast packet for each virtual local area network interface. An option field of the dynamic host configuration protocol request multicast packet carries a base station identifier. The obtaining unit receives a response multicast packet converted, by using the dynamic host configuration protocol relay, from a dynamic host configuration protocol response unicast packet sent by the network management system when receiving the request unicast packet. An option field of the dynamic host configuration protocol response multicast packet carries a management plane network address of the network management system. In this way, the network management system notifies the base station of an MP IP of the network management system.

In a second implementation of the third aspect of embodiments of this application, a domain name system server address field of the router advertisement packet may be configured as a management plane network address of the network management system. In this way, the obtaining unit may access a domain name system server to obtain the management plane network address of the network management system. The processing unit establishes the management channel connection between the base station and the network management system based on the management plane network address of the network management system.

In a third implementation of the third aspect of embodiments of this application, the processing unit may establish the management channel connection between the base station and the network management system based on a preset management plane network address of the network management system. The preset management plane network address includes a management plane network address that is of the network management system and that is preset when the base station is at delivery or configured in a local connection manner.

In a fourth implementation of the third aspect of embodiments of this application, in a local deployment scenario, the base station serves as a server, and may further notify the network management system of a management plane network address of the base station by using a DHCP relay, to establish the management channel connection.

Specifically, the processing unit may enable a dynamic host configuration protocol relay, where a service address of the relay is a management plane network address of the network management system. Then, the sending unit is configured to send a dynamic host configuration protocol-based multicast packet. The processing unit converts the multicast packet into a unicast packet by using the dynamic host configuration protocol relay. An option field of the unicast packet carries the management plane network address of the base station. The network management system may initiate a management channel connection establishment request based on the management plane network address of the base station. The obtaining unit is configured to receive the management channel connection establishment request from the network management system. The processing unit is configured to establish the management channel connection between the base station and the network management system based on the management channel connection establishment request.

In some embodiments, the sending unit may alternatively send a DHCP-based unicast packet directly to the network management system without performing relay by using a DHCP relay. An option field of the request unicast packet carries a base station identifier and an MP IP of the base station. In this way, a client may learn the MP IP of the server, the network management system serving as the client may initiate a management channel connection establishment request based on the MP IP of the server. The obtaining unit receives the management channel connection establishment request. The processing unit establishes the management channel connection between the base station and the network management system based on the management channel connection establishment request.

In a fourth implementation of the third aspect of embodiments of this application, the obtaining unit may alternatively obtain the foregoing association information from a router. Specifically, the obtaining unit may receive a link layer discovery protocol packet, and obtain the association information of the upper-layer service based on a virtual local area network identifier field and a service field in the link layer discovery protocol packet. The association information includes an upper-layer service applicable to a virtual local area network identified by the virtual local area network identifier field. Then, the processing unit may determine the virtual local area network and the network address of the upper-layer service based on the upper-layer service applicable to the virtual local area network identified by the virtual local area network identifier field, and the virtual local area network identifier and the interface network address that are generated in advance.

In a fifth implementation of the third aspect of embodiments of this application, the upper-layer service further includes an internet key exchange service. The association information includes a virtual local area network usage rule and an address allocation message that are delivered by the network management system for the base station by using the management channel connection. The address allocation message includes a management plane network address, a control plane network address, and a user plane network address that are allocated by the network management system to the base station based on respective address pools corresponding to the management plane service, the control plane service, and the user plane service. In this way, the processing unit may determine a virtual local area network and a network address of the internet key exchange service according to the virtual local area network usage rule for the base station and based on the virtual local area network identifier and the interface network address that are generated in advance, and determine the management plane network address, the control plane network address, and the user plane service network address of the base station based on the address allocation message.

In a sixth implementation of the third aspect of embodiments of this application, the apparatus further includes the sending unit. The sending unit is configured to send a probe request packet. The processing unit is further configured to: when a response probe advertisement packet is received within a preset time period, determine that a physical port is in an up state; or when no probe advertisement packet is received within a preset time period, determine that a physical port is in a false up state, and update a negotiation mode and a negotiation rate of the physical port. The sending unit is configured to continue to send the probe request packet based on an updated negotiation mode and negotiation rate until the probe advertisement packet is received.

The processing unit automatically generates the virtual local area network identifier based on a virtual local area network identifier of the router advertisement packet received through the physical port. Then, the processing unit automatically generates a global unicast address as the interface network address by using a stateless address autoconfiguration mechanism based on a network address prefix carried in the router advertisement packet.

In an eighth implementation of the third aspect of embodiments of this application, the processing unit may determine corresponding virtual routing and forwarding based on the virtual local area network identifier of the router advertisement packet or a physical port identifier corresponding to the physical port that receives the router advertisement packet, and generate a default route for each virtual routing and forwarding, where the default route includes a destination address and a next-hop address of the default route, and the next-hop address of the default route is a source address of the router advertisement packet. Certainly, the processing unit may alternatively use the interface network address automatically generated for the virtual local area network interface as a source address, and use a source address of the router advertisement packet as a next-hop address of a source address route, to generate the source address route.

It should be noted that the apparatus provided in the third aspect corresponds to the method provided in the first aspect. Therefore, for the possible implementations and technical effects of the apparatus provided in the third aspect, refer to the description of the method provided in the first aspect.

A fourth aspect, which is not an embodiment of the present invention but helpful for understanding certain aspects thereof, provides a communication apparatus. The apparatus includes a processing unit and a sending unit.

The processing unit is configured to establish a management channel connection to a base station.

The sending unit is configured to deliver association information of an upper-layer service to the base station by using the management channel connection, where the upper-layer service includes a management plane service, a control plane service, and a user plane service, and the association information is used by the base station to determine a virtual local area network and a network address of the upper-layer service.

In a first implementation of the fourth aspect, the processing unit is configured to:
establish the management channel connection to the base station based on a management plane network address of a peer end, where the management plane network address of the peer end is obtained by using a dynamic host configuration protocol relay packet.

In some implementations, the apparatus may further receive a management plane network address of the base station, and send a management channel connection establishment request to the base station, to establish the management channel connection.

Specifically, the apparatus further includes an obtaining unit, configured to receive a request unicast packet, where the request unicast packet is generated by a router by converting a dynamic host configuration protocol request multicast packet by using a dynamic host configuration protocol relay, and the dynamic host configuration protocol request multicast packet is sent by the base station for each virtual local area network interface. An option field of the dynamic host configuration protocol request multicast packet carries a base station identifier of the base station and the management plane network address of the base station.

In some other implementations, the apparatus may send a management plane network address of a network management system to the base station. The base station sends a management channel connection establishment request based on the management plane network address of the network management system. The apparatus establishes the management channel connection based on the management channel connection establishment request.

Specifically, the apparatus further includes an obtaining unit, configured to receive a request unicast packet, where the request unicast packet is generated by a router by converting a dynamic host configuration protocol request multicast packet by using a dynamic host configuration protocol relay, and the dynamic host configuration protocol request multicast packet is sent by the base station for each virtual local area network interface. An option field of the dynamic host configuration protocol request multicast packet carries a base station identifier of the base station.

Then, the sending unit is further configured to send a dynamic host configuration protocol response unicast packet, where the dynamic host configuration protocol response unicast packet is converted by a router by using a dynamic host configuration protocol relay to obtain a response multicast packet. An option field of the response multicast packet carries a management plane network address of the network management system.

In a second implementation of the fourth aspect, in a local deployment scenario, the base station serves as a server. The apparatus further includes:
an obtaining unit, configured to receive a unicast packet, where an option field of the unicast packet carries a management plane network address of the base station, and the unicast packet is obtained by the base station by enabling a dynamic host configuration protocol relay and converting a dynamic host configuration protocol-based multicast packet or is directly generated by the base station.

The sending unit is further configured to send a management channel connection establishment request to the base station based on the management plane network address of the base station.

It should be noted that the apparatus provided in the fourth aspect corresponds to the method provided in the second aspect. Therefore, for the possible implementations and technical effects of the apparatus provided in the fourth aspect, refer to the description of the method provided in the second aspect.

A fifth aspect of embodiments of this application provides a base station. The base station includes a processor and a memory.

The memory is configured to store program code and transmit the program code to the processor.

The processor is configured to perform, according to instructions in the program code, the communication method according to any one of the first aspect of embodiments of this application and the designs of the first aspect.

A sixth aspec, which is not an embodiment of the present invention but helpful for understanding certain aspects thereof, provides a network management system. The network management system includes a processor and a memory.

The memory is configured to store program code and transmit the program code to the processor.

The processor is configured to perform, according to instructions in the program code, the communication method according to any one of the second aspect and the designs of the second aspect.

A seventh aspect of embodiments of this application provides a system. The system includes a base station and a network management system.

The base station is configured to perform the communication method according to any one of the first aspect of embodiments of this application and the designs of the first aspect.

The network management system is configured to perform the communication method according to any one of the second aspect and the designs of the second aspect.

An eighth aspect of embodiments of this application provides an electronic apparatus. The electronic apparatus may include at least one processor and an interface circuit. Related program instructions are executed in the at least one processor, and the electronic apparatus is enabled to implement any one of the first aspect and the designs of the first aspect. The electronic apparatus is a base station in the method according to the first aspect and the designs of the first aspect. Optionally, the electronic apparatus may further include at least one memory, and the memory stores the related program instructions.

A ninth aspect of embodiments of this application provides a computer-readable storage medium. The computer-readable storage medium may be applied to an electronic apparatus, and the computer-readable storage medium stores related program instructions. When the related program instructions are run, the electronic apparatus is enabled to implement the method according to any one of the first aspect of embodiments of this application and the designs of the first aspect.

A tenth aspect, which is not an embodiment of the present invention but helpful for understanding certain aspects thereof, provides a computer-readable storage medium. The computer-readable storage medium may be applied to an electronic apparatus, and the computer-readable storage medium stores related program instructions. When the related program instructions are run, the electronic apparatus is enabled to implement the method according to any one of the second aspect and the designs of the second aspect.

An eleventh aspect of embodiments of this application provides a communication apparatus. The communication apparatus is configured to perform the method according to the first aspect of embodiments of this application and the designs of the first aspect.

A twelfth aspect of embodiments of this application provides a communication apparatus. The communication apparatus includes a processor. The processor is coupled to a memory, and is configured to invoke a computer program from the memory and run the computer program, to perform the method according to the first aspect of embodiments of this application and the designs of the first aspect.

A thirteenth aspect of embodiments of this application provides a communication apparatus. The communication apparatus includes a processor and a memory. The memory is configured to store a computer program. The processor is configured to invoke a computer program from the memory and run the computer program, to perform the method according to the first aspect of embodiments of this application and the designs of the first aspect.

A fourteenth aspect of this application provides a computer program product. The computer program product includes related program instructions. When the related program instructions are executed, the method according to the first aspect and the designs of the first aspect or is implemented.

### BRIEF DESCRIPTION OF DRAWINGS

To describe technical solutions in embodiments of this application or in the conventional technology more clearly, the following briefly describes the accompanying drawings for describing the embodiments or the conventional technology. It is clear that the accompanying drawings in the following description show some embodiments of this application, and persons of ordinary skill in the art may still derive other drawings from these accompanying drawings without creative efforts.
FIG. 1a and FIG. 1b are diagrams of system architectures of a communication method according to an embodiment of this application;
FIG. 2 is a diagram of a structure of a network on a transmission side of a base station according to an embodiment of this application;
FIG. 3 is a flowchart of a communication method according to an embodiment of this application;
FIG. 4a and FIG. 4b are schematic diagrams of scenarios of isolation by using different VLANs and isolation by using a same VLAN according to an embodiment of this application;
FIG. 5 is a schematic diagram of configuring an upper-layer service by using a usage profile according to an embodiment of this application;
FIG. 6 is a schematic diagram of generating an interface IP based on an RA packet according to an embodiment of this application;
FIG. 7 is a schematic diagram of generating a default route based on a source address of an RA packet according to an embodiment of this application;
FIG. 8 is a schematic diagram of determining an upper-layer service VLAN/IP based on an LLDP packet according to an embodiment of this application;
FIG. 9a to FIG. 9c are schematic diagrams in which an MP, a CP, and a UP each use a separate VLAN/IP or use a shared VLAN/IP in a non-security scenario according to an embodiment of this application;
FIG. 10 is a schematic diagram of allocating an MP IP, a CP IP, and a UP IP by a network management system based on an address pool according to an embodiment of this application;
FIG. 11a to FIG. 11c are schematic diagrams in which an MP, a CP, and a UP each use a separate VLAN/IP or use a shared VLAN/IP in a security scenario according to an embodiment of this application;
FIG. 12a and FIG. 12b are a signaling flowchart and a method flowchart of establishing a management channel connection according to an embodiment of this application;
FIG. 13 is a signaling flowchart of establishing a management channel connection according to an embodiment of this application;
FIG. 14 is a schematic diagram of establishing a management channel connection based on a DNS server according to an embodiment of this application;
FIG. 15 is a signaling flowchart of establishing a management channel connection according to an embodiment of this application;
FIG. 16A and FIG. 16B are a signaling flowchart of establishing a management channel connection according to an embodiment of this application;
FIG. 17A is a schematic diagram of a structure of a communication apparatus according to an embodiment of this application;
FIG. 17B is a schematic diagram of a structure of a communication apparatus, which is not an embodiment of the present invention but helpful for understanding certain aspects thereof;
FIG. 18A is a schematic diagram of a structure of a base station according to an embodiment of this application;
FIG. 18B is a schematic diagram of a structure of a network management system, which is not an embodiment of the present invention but helpful for understanding certain aspects thereof; and
FIG. 19 is a schematic diagram of a structure of an electronic apparatus according to an embodiment of this application.

### DESCRIPTION OF EMBODIMENTS

Embodiments of this application provide a communication method, to resolve a problem that manual planning and station-by-station configuration are required in a scenario such as new base station employment, transmission network reconstruction, or base station expansion. In the communication method, a base station performs self-learning by using a received RA packet to generate a VLAN ID, an interface IP, and a route, then obtains association information of an upper-layer service, and determines a VLAN and an IP of the upper-layer service based on the association information. In this way, base station transmission planning is not required, and automatic configuration is implemented. This improves configuration efficiency and reduces configuration labor costs and time costs.

To make persons skilled in the art understand the solutions in this application better, the following clearly and completely describes the technical solutions in embodiments of this application with reference to the accompanying drawings in embodiments of this application. It is clear that the described embodiments are merely some rather than all of embodiments of this application.

In this application, terms such as "first", "second", "third", and "fourth" (if exists) in the specification, the claims, and the accompanying drawings are intended to distinguish between similar objects but do not necessarily indicate a specific order or sequence. It should be understood that the data termed in such a way are interchangeable in proper circumstances so that embodiments of this application described herein can be implemented in orders except the order illustrated or described herein. Moreover, the terms "include", "contain" and any other variants mean to cover non-exclusive inclusion. For example, a process, method, system, product, or device that includes a list of steps or units is not necessarily limited to those expressly listed steps or units, but may include other steps or units that are not expressly listed or inherent to the process, method, product, or device.

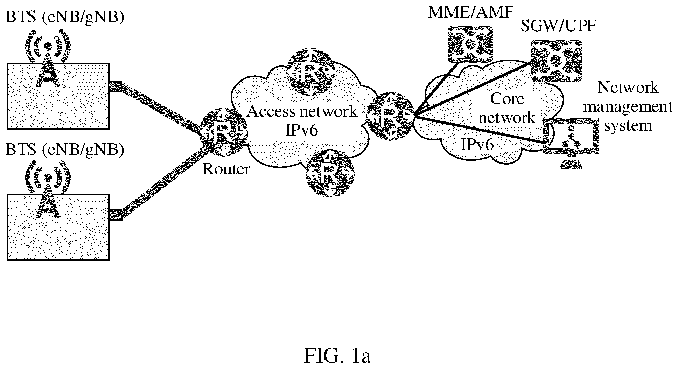

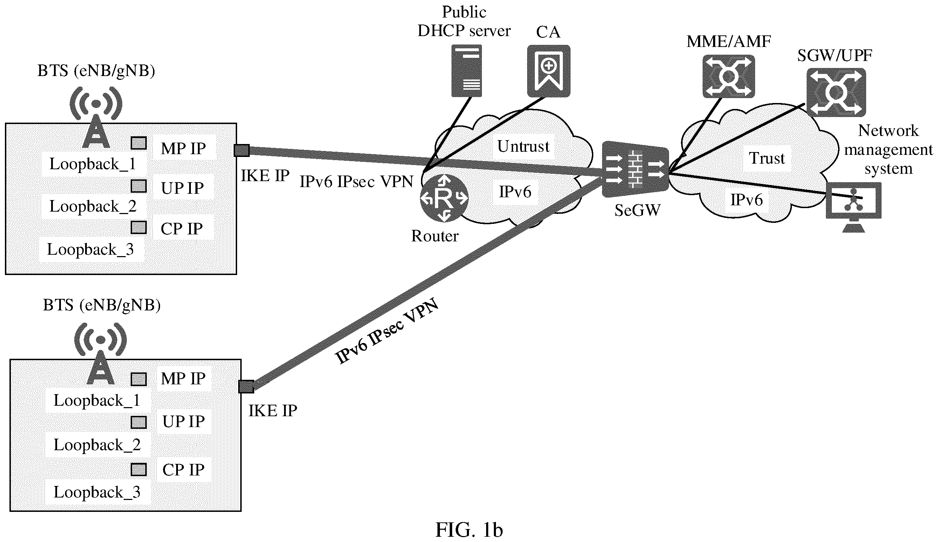

Embodiments of this application may be applied to a network architecture shown in FIG. 1a or FIG. 1b. FIG. 1a is a network architecture in a non-security scenario, and FIG. 1b is a network architecture in a security scenario. A major difference between the security scenario and the non-security scenario lies in whether an internet protocol security (IP Security, IPSec) protocol is deployed to implement secure communication. As shown in FIG. 1a, a base station is connected to an access network (also referred to as an access layer) via a router (Router). Then, the base station is connected to a core network (also referred to as a core layer) via the router. The core layer includes at least a network management system. In this way, the base station can implement adaptive configuration of base station transmission by interacting with the router and the network management system.

As shown in FIG. 1b, a security gateway seGW is included between an access network and a core network. The security gateway determines that the core network is trusted (trust) and that the access network is untrusted (unTrust). A base station includes an inner address and an outer address. The inner address is specifically an MP IP configured on a local loopback interface loopback 1, a UP IP configured on a loopback_2, and a CP IP configured on a loopback_3. The outer address includes an IKE IP. The base station is further connected to a public dynamic address configuration server (Public DHCP Server) and a certification authority (CA) via a router. Then, the base station interacts with the public DHCP server and the CA by using a DHCP multicast packet, to obtain an IP of the seGW and an MP IP of a network management system. The base station determines a local IP of the IKE based on an automatically generated interface IP, establishes an IKE connection based on the IKE IP and the IP of the seGW, and establishes a secure channel between the base station and the seGW, namely, a virtual private network (Virtual Private Network, vpn) between the base station and the seGW. Then, the base station requests an IP of an upper-layer service from the network management system through the secure channel between the base station and the seGW. The network management system allocates the MP IP, the CP IP, and the UP IP in corresponding service address pools and returns the MP IP, the CP IP, and the UP IP to the base station. In this way, adaptive configuration of base station transmission is implemented.

It may be understood that FIG. 1a and FIG. 1b are described by using a fourth generation mobile 4G communication system and a fifth generation mobile communication system as examples. In FIG. 1a and FIG. 1b, the base station may be specifically an eNB or a gNB, and includes a base transceiver station (Base Transceiver Station, BTS). In a 4G network, a core network further includes a mobility management entity (Mobility Management Entity, MME) and a serving gateway (Serving Gateway, SGW). The router is further connected to the MME and the SGW, to implement network management. In a 5G network, functions of the MME are decomposed into an access and mobility management function (Access and Mobility Management Function, AMF), and the SGW is replaced by a user plane function (User Plane Function, UPF). In actual application, the communication method provided in embodiments of this application may also be applied to another communication system.

It should be further noted that FIG. 1a and FIG. 1b use internet protocol version 6 IPv6 networking as an example for description. In actual application, the foregoing communication method may be applied to any network that supports a stateless address autoconfiguration mechanism. Certainly, when another address configuration mechanism can implement automatic address configuration, the foregoing communication method may also be applied to a network that supports another address configuration mechanism.

During base station configuration, a range of parameters related to base station transmission may be divided into two parts. One part is internal configuration of the base station, specifically including quality of service (Quality of Service, Qos), packet filtering, and the like. Parameters may be automatically generated inside the base station without interconnection negotiation with another device. Details are not described herein again. The other part is that parameters need to be generated through interconnection negotiation with another device. This application focuses on describing in detail the parameters that need to be generated through interconnection negotiation with another device.

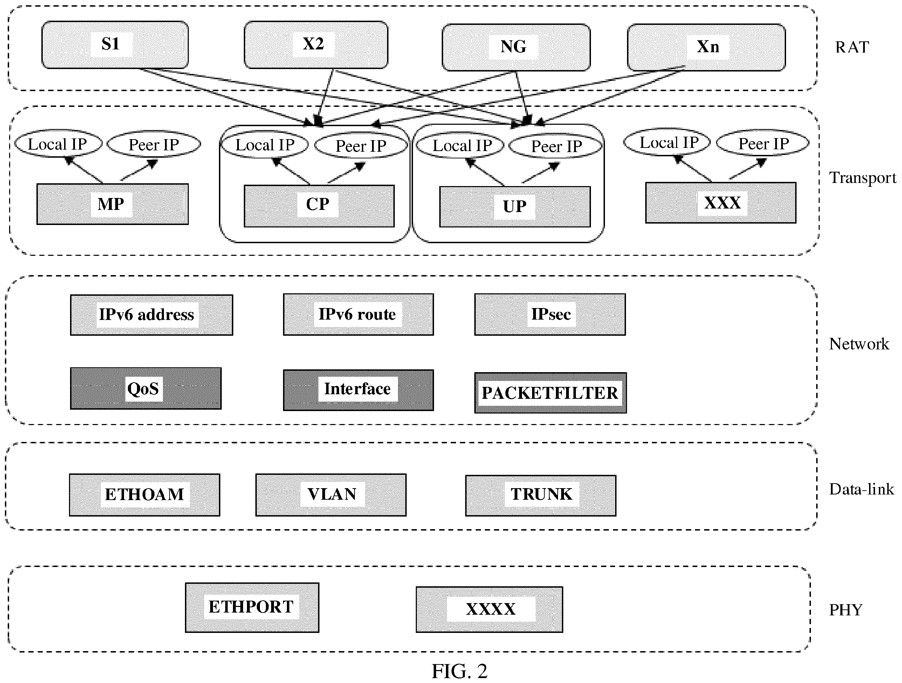

Specifically, refer to FIG. 2. A transmission side of the base station includes a physical layer PHY, a data link layer (data-link), a network layer (network), and a transport layer (transport). The physical layer includes a physical port, such as an Ethernet port ETHPORT. The data link layer includes a VLAN, and certainly includes another port such as a TRUNK in some cases. The network layer includes an IP address (such as an IPv6 address), a route (such as an IPv6 route), an IPsec, QoS, an interface, and a packet filter. The transport layer includes service network elements such as an MP, CP, and UP, and certainly includes another service network element such as an IKE in some cases. Each service network element includes an IP of a local end and an IP of a peer end, namely, a local IP and a peer IP. Channel connections are also established between a radio network controller (Radio Network Controller, RNC), a base station controller (Base Station Controller), and a core network and a control plane CP and a user plane UP of the base station. For example, S1, X2, NG, and Xn are connected to the CP and the UP.

The QoS, the interface, and the packet filter are processed by the base station. A plurality of base stations are mounted to one network management system. In other words, the plurality of base stations correspond to a same network management system address. Therefore, planning of an MP peer IP is not required. S1 and NG have a same peer core network. Control plane peer IPs of X2 and Xn can be learned from a signaling packet. Therefore, planning of the CP peer IPs is not required. User plane peer IPs of S 1, X2, NG, and Xn are learned from a signaling packet. Therefore, planning of the UP peer IPs is not required.

Therefore, transmission-related parameters that need to be automatically generated include the ETHPORT, the VLAN, an interface IP, the route, an MP local IP, a CP local IP, and a UP local IP. The interface IP, the MP local IP, the CP local IP, and the UP local IP may all be represented by using a prefix notation, that is, represented as IP/Prefix. It should be noted that, in a security scenario, the transmission-related parameters that need to be automatically generated further include an IKE local IP.

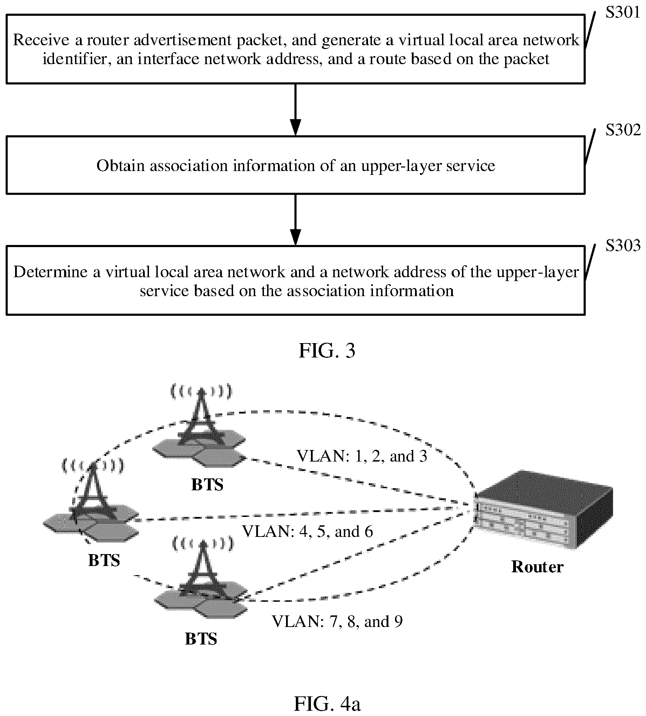

For ease of understanding, the following describes a specific procedure in this embodiment of this application. In this embodiment of this application and subsequent embodiments, refer to FIG. 3. An embodiment of a communication method in embodiments of this application includes the following steps:

S301: Receive a router advertisement packet, and generate a virtual local area network identifier, an interface network address, and a route based on the router advertisement packet.

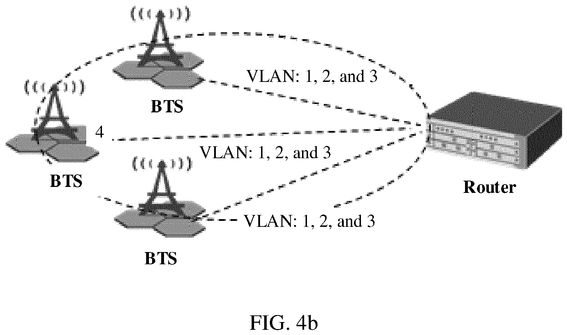

For a base station, there are two scenarios for a VLAN between BTSs. In one scenario, different BTSs are isolated by using different VLANs. As shown in FIG. 4a, three BTSs each are isolated by using VLANs 1, 2, and 3, VLANs 4, 5, and 6, and VLANs 7, 8, and 9 respectively. In the other scenario, different BTSs are isolated by using a same VLAN. Refer to FIG. 4b. Three BTSs are isolated by using VLANs 1, 2, and 3.

In the scenario in which the BTSs are isolated by using the same VLAN, the base station may directly configure an interface (Interface) in general configuration, and specify a VLAN ID for the interface. In the scenario in which the BTSs are isolated by using different VLANs, the base station may automatically generate the VLAN ID by learning the RA packet.

Specifically, an interface (Interface) is carried on an ETH or a TRUNK, and may be configured as a VLAN interface, including a VLAN ID attribute. When a VLAN ID parameter of the VLAN interface identifies the virtual local area network identifier that is automatically generated, for example, when the VLAN ID parameter is set to an invalid value which is a value other than a valid value ranging from 1 to 4094, the base station may automatically generate the VLAN ID based on a VLAN ID of the RA packet received through a physical port.

When subsequently receiving association information of an upper-layer service delivered by a network management system, where the association information specifically includes a VLAN usage rule for the base station, the base station may further determine, according to the VLAN usage rule and based on the automatically generated VLAN ID, a VLAN ID corresponding to each service. The VLAN usage rule is specifically a VLAN planning rule set by a user on the network management system for the base station. The planning rule specifically includes a correspondence between a VLAN and a service. VLAN classification configuration of a transmission network is performed according to the VLAN usage rule for the base station.

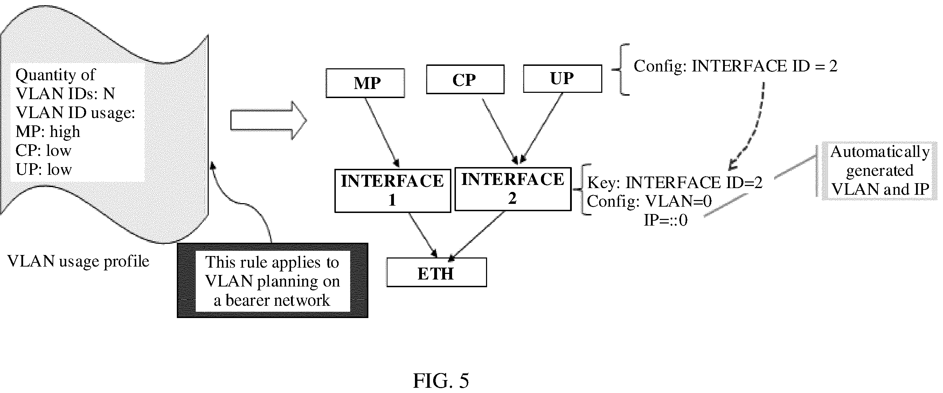

In an example of this application, a user may configure a correspondence between a size of the VLAN ID or a last digit of the VLAN ID and a service as the VLAN usage rule. In this way, the base station may identify, based on the size of the VLAN ID or the last digit of the VLAN ID, whether a VLAN usage is an MP usage, a CP usage, or a UP usage. Refer to FIG. 5. A user configures a VLAN usage rule in a VLAN usage profile, specifically, an MP is high, a CP is low, and a UP is low. To be specific, a VLAN with a smaller VLAN ID value is used as a VLAN of a CP service or a UP service, and a VLAN with a larger VLAN ID value is used as a VLAN of an MP service. In some implementations, a user may alternatively configure a VLAN size rule for a VLAN interface directly. The VLAN size rule is also essentially a VLAN usage rule. Specifically, a field value corresponding to a VLAN size rule of each VLAN interface is a number, a value relationship of the number is consistent with a value relationship of the VLAN ID, and VLAN configuration may be implemented based on the value relationship.

For example, a field value corresponding to a VLAN size rule of a VLAN interface 1 is 30, and a field value corresponding to a VLAN size rule of a VLAN interface 2 is 20. When VLAN IDs of generated VLANs are 200 and 300, based on the foregoing correspondence, a VLAN of the VLAN interface 1 is configured as a VLAN whose VLAN ID is 300, and a VLAN of the VLAN interface 2 is configured as a VLAN whose VLAN ID is 200. The upper-layer service references the VLAN interface. For example, an MP service references the VLAN interface 1. Therefore, a VLAN of the MP service may be configured as the VLAN whose VLAN ID is 300. For VLAN configuration of a CP service and a UP service, refer to the VLAN configuration of the MP service. Details are not described herein again.

Considering that a router advertises the RA based on a VLAN interface, and the base station also receives the RA packet on a corresponding VLAN interface, the base station may automatically generate a global unicast address as the interface network address based on a network address prefix carried in the RA packet received on the VLAN interface. Specifically, in a scenario such as IPv6 networking, the base station may automatically generate the interface network address by using a stateless address autoconfiguration mechanism.

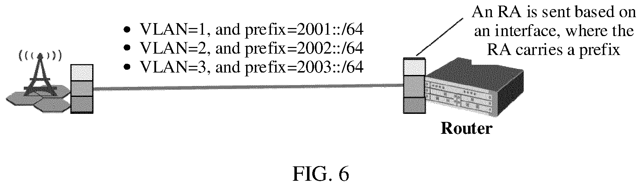

In an example, refer to FIG. 6. The router sends the RA packet based on the VLAN interface, where the RA packet further carries an IP prefix. For example, an RA packet sent based on a VLAN interface whose VLAN ID is 1 has a prefix of 2001::/64, an RA packet sent based on a VLAN interface whose VLAN ID is 2 has a prefix of 2002:764, and an RA packet sent based on a VLAN interface whose VLAN ID is 3 has a prefix of 2003::/64. In this way, when receiving the RA packet through the foregoing VLAN interface, the base station may automatically generate a global unicast address as the interface IP by using the stateless address autoconfiguration mechanism based on the prefix carried in each RA packet.

Then, the base station may automatically generate the route based on the RA packet received through the physical port. Considering that a route conflict problem may exist in RA packets received by the base station through different physical ports or different VLAN interfaces, this application provides two route generation manners to resolve the route conflict problem. In one manner, corresponding VRF is determined for different physical interfaces or VLAN interfaces, and a default route is generated for each VRF. In the other manner, an interface IP automatically generated on a VLAN interface is used as a source address, to generate a source address route. Routing is performed according to a source address routing policy.

During specific implementation, the base station may determine corresponding VRF based on a VLAN ID of an RA packet or a physical port identifier corresponding to a physical port that receives the RA packet, and then, for each VRF, uses a source address of the RA packet as a next-hop address of the default route. Because the default route may match any destination address, ::0/0 may be used as a destination address, and the default route is generated based on the destination address and the next-hop address of the default route.

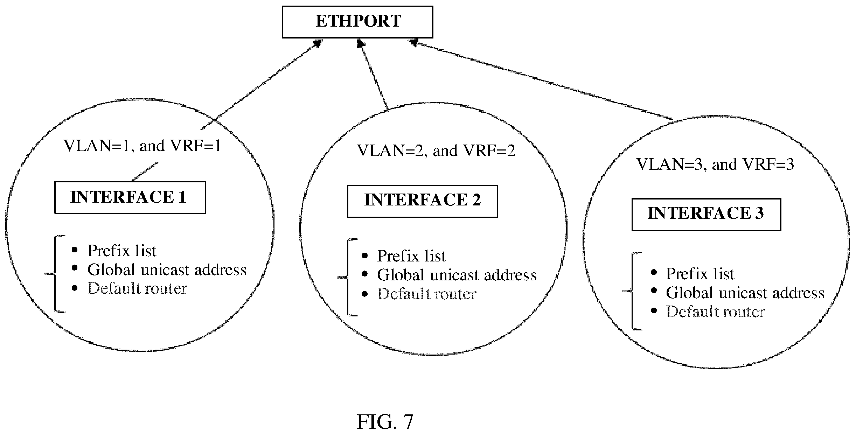

For ease of understanding, description is provided with reference to a specific example. As shown in FIG. 7, three VLAN interfaces are configured on an Ethernet port ETHPORT of the base station, and VLAN IDs corresponding to the VLAN interfaces are 1, 2, and 3. When receiving RA packets, the base station determines three pieces of VRF based on VLAN IDs of the RA packets, namely, VRF 1, VRF 2, and VRF 3. For each VRF, the base station uses a source address of an RA packet of the VRF as a next-hop address of a default route, and generates the default route corresponding to the VRF based on the destination address ::0/0 and the next-hop address of the default route.

Certainly, the base station may alternatively use the source address routing policy. Specifically, the base station uses the interface network address automatically generated for the VLAN interface as the source address, and uses a source address of an RA packet as a next-hop address of the source address route, to generate the source address route based on the source address and the next-hop address of the source address route.

In some possible implementations, the base station may alternatively generate any one or more of the VLAN ID, the interface IP, and the route based on the RA packet. For example, the base station may generate the interface IP based on the RA packet, and generate the VLAN ID and the route according to another mechanism.

S302: Obtain the association information of the upper-layer service.

Specifically, the association information of the upper-layer service is information related to the upper-layer service, and may be specifically an association relationship between the upper-layer service and a data link layer (namely, an L2 layer) VLAN. The association relationship between the upper-layer service and the L2 layer VLAN includes a direct association relationship and an indirect association relationship. The direct association relationship may be a one-to-one correspondence between the upper-layer service and the VLAN ID, and the indirect association relationship may be a mapping rule between the upper-layer service and the VLAN ID. During specific implementation, the base station may obtain the foregoing association information from the network management system, or may obtain the foregoing association information from the router. It should be noted that, when obtaining the foregoing association information from the network management system, a management channel connection between the base station and the network management system needs to be established first.

In actual application, one of the base station and the network management system may be used as a server, and the other may be used as a client. The client can establish a management channel connection between the two after learning an MP IP of the server. That the client learns the MP IP of the server may be: The server notifies the client of the MP IP of the server in a form such as broadcast, or the MP IP of the server may be preset in the client. Detailed description is provided below with reference to a specific embodiment.

S303: Determine a virtual local area network and a network address of the upper-layer service based on the association information.

The upper-layer service includes an MP service, a CP service, and a UP service. In actual application, the base station may first determine VLANs of upper-layer services such as the MP, CP, and UP services based on the foregoing association information and the VLAN ID generated based on the RA packet in advance, and then determine IPs of the upper-layer services based on the one-to-one correspondence between the VLAN ID and the interface IP. The following describes in detail a specific implementation of determining a VLAN and an IP of an upper-layer service in different scenarios.

It may be understood that, in a non-security scenario, the association information may be a VLAN usage rule for the base station delivered by the network management system by using the foregoing management channel connection. Refer to FIG. 5. The VLAN usage rule is specifically a VLAN classification rule in a VLAN usage profile. In the example, the VLAN usage rule is "MP: high, CP: low, UP: low". To be specific, a VLAN with a smaller VLAN ID value is used as a VLAN of the CP or UP, and a VLAN with a larger VLAN ID value is used as a VLAN of the MP. In this way, a VLAN of each upper-layer service may be determined based on a size of a VLAN ID generated in advance. In actual application, the base station may further update a VLAN ID parameter on a VLAN interface from an invalid value to a VLAN ID corresponding to the VLAN of the upper-layer service. The VLAN ID and the interface IP that are generated in advance may be in a one-to-one correspondence. Therefore, an interface IP corresponding to a VLAN ID of each upper-layer service VLAN may be determined as an IP of each upper-layer service.

Certainly, the association information may further include a correspondence between the upper-layer service and the VLAN interface. Refer to FIG. 5. For the UP service, interface ID=2 is configured in configuration information, indicating that the UP service corresponds to an interface 2. In this way, after determining the VLAN of the upper-layer service according to the VLAN usage rule, the base station may further determine a VLAN interface corresponding to the VLAN of the upper-layer service with reference to the correspondence between the upper-layer service and the VLAN interface, and determine an interface IP automatically generated on the VLAN interface as the IP of the upper-layer service.

It should be noted that whether to configure the correspondence between the upper-layer service and the VLAN interface may be determined based on an actual requirement. When the VLAN/IP of the upper-layer service is determined according to the VLAN usage rule, the relationship between the upper-layer service and the VLAN interface does not need to be additionally configured. This reduces configuration workload and configuration costs.

In a non-security scenario, a user may further configure LLDP on a switch or router connected to the base station. The LLDP packet includes a VLAN ID field and a service field. The service field may be generated by filling a service in a VLAN name field or a custom field. A service in the service field represents a service applicable to a VLAN identified by the VLAN ID field. In this way, the foregoing switch or router may advertise the LLDP packet to notify the base station of a VLAN usage.

Based on this, the base station may receive the LLDP packet, and determine the association information of the upper-layer service based on the virtual local area network identifier field and the service field in a link layer discovery protocol packet. The association information is specifically the upper-layer service applicable to the VLAN identified by the VLAN ID field. In this way, the base station may first determine the VLAN of the upper-layer service based on the foregoing association information, and then determine the interface IP corresponding to the VLAN ID of the VLAN of the upper-layer service as the IP of the upper-layer service.

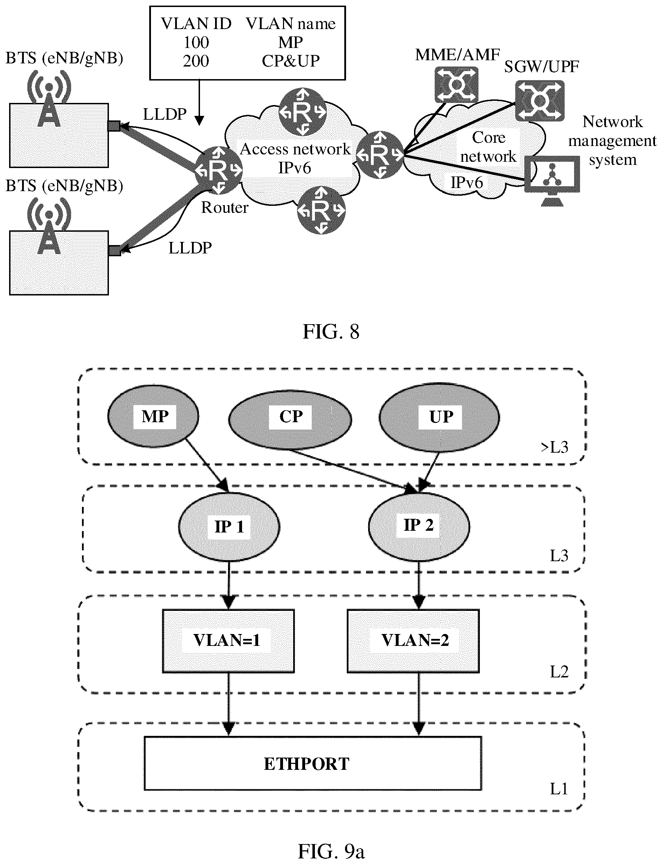

For ease of understanding, this application further provides a specific example. Refer to FIG. 8. The router sends LLDP packets to two base stations, where the LLDP packet carries a VLAN ID and a VLAN name, and the VLAN name is filled with a service. For example, a VLAN ID is 100, and a corresponding VLAN name is filled with an MP; a VLAN ID is 200, and a corresponding VLAN name is filled with a CP&UP. In this way, when receiving the LLDP packet, the base station may determine VLANs, MP IPs, CP IPs, and UP IPs of services such as the MP, CP, and UP based on the VLAN ID and the VLAN name carried in the LLDP packet, and a VLAN ID and an interface IP that are generated in advance.

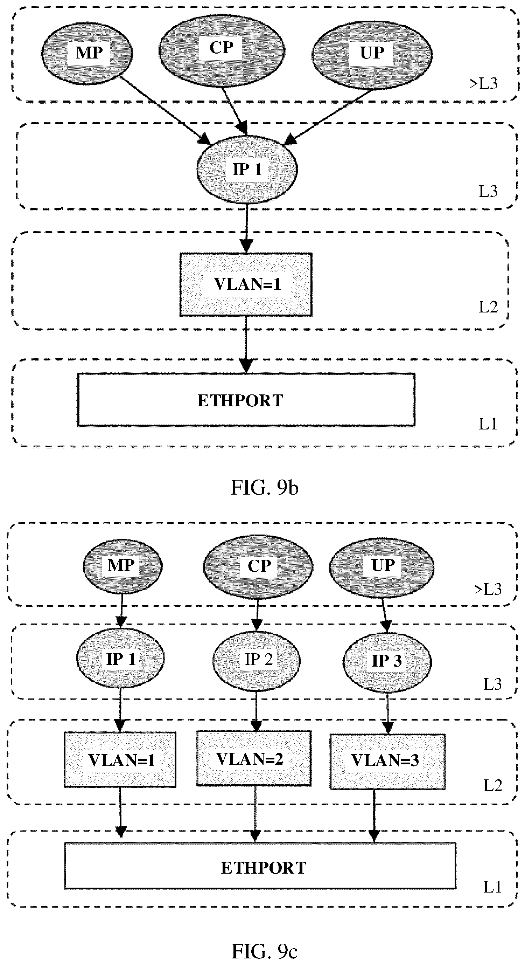

It should be noted that FIG. 8 is an example in which the MP uses a separate VLAN/IP, and the CP and the UP share a VLAN/IP. For a specific network structure thereof, refer to FIG. 9a. Certainly, as shown in FIG. 9b, the MP, the CP, and the UP may use a same VLAN/IP in some cases. Alternatively, as shown in FIG. 9c, when there is a relatively high requirement on isolation, the MP, the CP, and the UP may each use a separate VLAN/IP.

It should be noted that, in a security scenario, the upper-layer service further includes an IKE service. Based on this, the network management system may deliver a VLAN usage rule for the base station to the base station by using the management channel connection, and allocate an MP IP, a CP IP, and a UP IP to the base station based on respective address pools corresponding to the MP service, the CP service, and the UP service. The network management system may generate an address allocation message based on the allocated IPs, and deliver the address allocation message to the base station. In other words, the association information includes the VLAN usage rule for the base station and the address allocation message that are delivered by the network management system. In this way, the base station may first determine a VLAN and an IP of the IKE service according to the VLAN usage rule for the base station and based on the VLAN ID and the interface IP that are generated in advance. Then, the base station may determine the MP IP, the CP IP, and the UP IP based on the address allocation message.

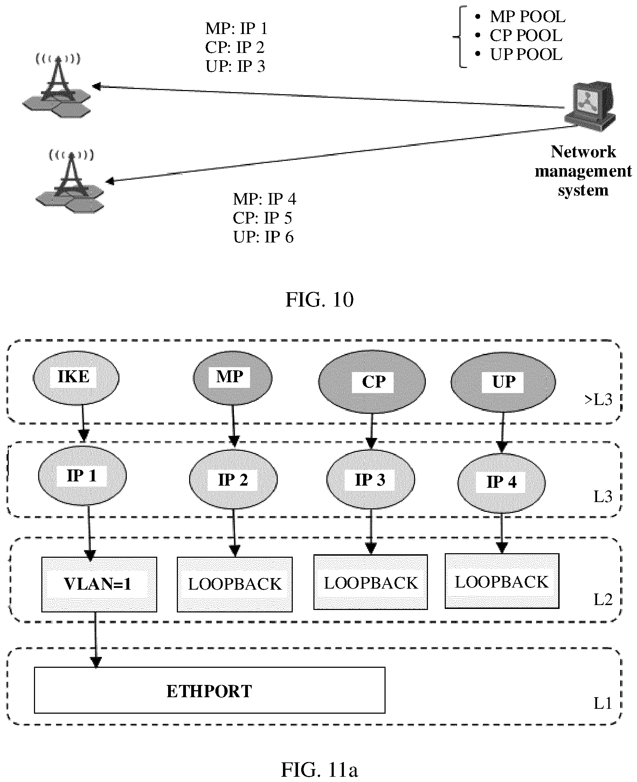

As shown in FIG. 10, the network management system may allocate IP addresses to user planes, control planes, and management planes of different base stations based on IP address pools of a plurality of service types supported by the network management system, such as an MP pool, a CP pool, and a UP pool, to implementing triple-plane isolation. For example, the network management system may allocate an IP 1, an IP 2, and an IP 3 to one base station as an MP IP, a CP IP, and a UP IP of the base station, and allocate an IP 4, an IP 5, and an IP 6 to another base station as an MP IP, a CP IP, and a UP IP of the base station.

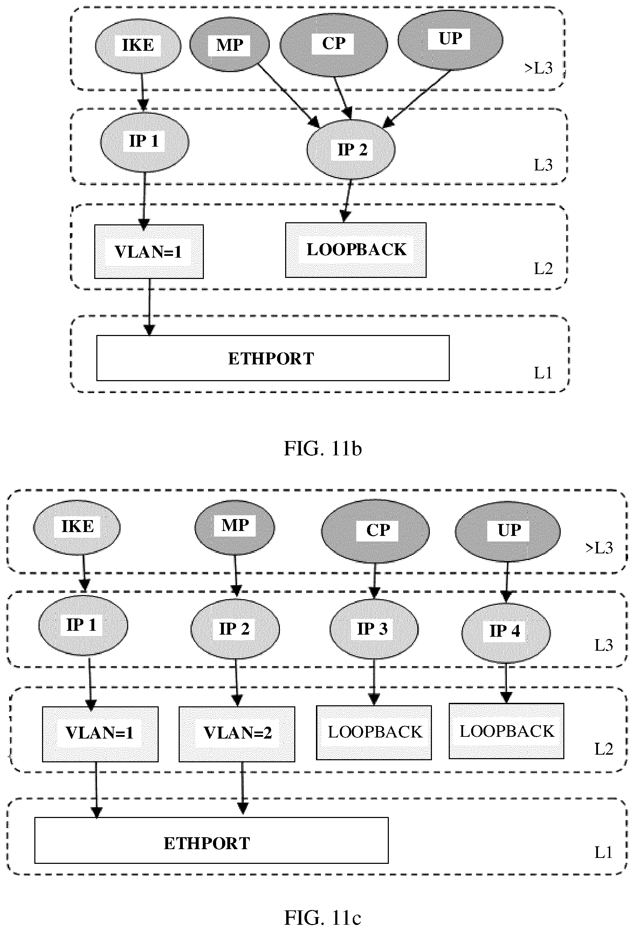

It should be noted that, in the foregoing example, the MP, CP, and UP use different inner IPs, and a local IP of an outer IKE uses a separate VLAN/IP. For a network structure thereof, refer to FIG. 11a. In actual application, as shown in FIG. 11b, the MP, CP, and UP may use a same inner IP, and a local IP of an outer IKE uses a separate VLAN/IP. Alternatively, as shown in FIG. 11c, the MP is not encrypted and uses a separate VLAN/IP, an IKE uses a separate VLAN/IP, and the CP and UP use a separate loopback IP and are encrypted.

In some possible implementations, an inner IP, such as an MP IP, a CP IP, or a UP IP, may be further allocated by a security gateway. Specifically, Mode Config is configured on the security gateway side, so that an inner address of the base station is specified via the security gateway. Further, to implement triple-plane isolation of the MP, the CP, and the UP, an extension field may be added to a corresponding protocol. The extension field indicates that a usage of the allocated IP is for the MP service, the CP service, and/or the MP service. Certainly, a usage of the IP may alternatively be filled for a custom field in the protocol. This is not limited in this embodiment.

In actual application, the upper-layer service further includes a clock, namely, an IPCLK. Correspondingly, the base station may determine a VLAN and a local IP of the IPCLK in a manner same as or similar to that of the IKE service, and then establish a clock channel based on the local IP of the IPCLK, to ensure normal service running.

In some possible implementations, the base station may alternatively determine the VLAN or IP of the upper-layer service based on the foregoing association information. For example, the base station may determine the IP of the upper-layer service based on the association information, and determine the VLAN of the upper-layer service by using another mechanism.

It can be learned from the foregoing that an embodiment of this application provides a communication method. In the communication method, the base station performs self-learning by using the received RA packet to generate the VLAN ID, the interface IP, and the route, then obtains the association information of the upper-layer service, and determines the virtual local area network and the network address of the upper-layer service based on the association information. In this way, base station transmission planning is not required, and automatic configuration is implemented. This improves configuration efficiency and reduces configuration labor costs and time costs.

In some cases, the physical port of the base station may further present a false up state. Based on this, before receiving the RA packet and automatically generating the VLAN ID, the interface IP, and the route based on the RA packet, the base station may further determine whether the port is falsely up first.

During specific implementation, the base station may determine, in a self-detection manner, whether the physical port is falsely up. Specifically, the base station first sends a probe request packet, and then waits for a response probe advertisement packet. The probe request packet may be specifically an NS packet or an RS packet. When the request packet is the NS packet, the response packet is an NA packet. When the request packet is the RS packet, the response packet is an RA packet.

When the response probe advertisement packet is received within a preset time period, it may be determined that the physical port is in an up state. When no probe advertisement packet is received within a preset time period, it is determined that the physical port is in the false up state, and the base station updates a negotiation mode and a negotiation rate of the physical port, and continues to perform probe until the probe advertisement packet is received.

The physical port may be different types of ports. For ease of understanding, an example in which the physical port is an Ethernet port ETHPORT is used for description.

The Ethernet port may be classified into two types: an electrical port and an optical port. If the Ethernet port is the electrical port, it is determined that the negotiation mode is an auto-negotiation mode, and a port rate may be obtained through negotiation in the auto-negotiation mode. If the Ethernet port is the optical port, the negotiation mode and negotiation rate may be determined in an optical port self-detection manner.

Specifically, the optical port self-detection of the ETH is implemented through poll probe. When the physical port is the optical port, the base station may perform poll probe in descending order of rates according to a principle that the auto-negotiation mode takes precedence over a full-duplex mode at a same rate. When the optical port is in the up state (up state), to avoid a false up status, the base station actively sends a probe request packet. If the probe advertisement packet is received, the base station stops the probe, and determines a negotiation mode and a negotiation rate at this moment as the negotiation mode and the negotiation rate of the physical port. If no probe advertisement packet is received, the base station continues to perform poll probe until the probe advertisement packet is received.

This application further provides a detection result of the optical port self-detection, as shown in the following table.

**Table 1 Optical port self-detection result**

| Ethernet port mode configuration | | Negotiated status result | | Final result |
|---|---|---|---|---|
| Base station | Peer end | Base station | Peer end | |
| 1000M auto-negotiation | 1000M auto-negotiation | 1000M/FULL | 1000M/FULL | 1000M/FULL |
| | 1000M full-duplex | Down | 1000M/FULL | Down |
| | 100M full-duplex | Down | Down | Down |
| 1000M full-duplex | 1000M auto-negotiation | 1000M/FULL | Down | False up |
| | 1000M full-duplex | 1000M/FULL | 1000M/FULL | 1000M/FULL |
| | 100M full-duplex | Down | 100M/FULL | Down |
| 100M full-duplex | 1000M auto-negotiation | Down | Down | Down |
| | 1000M full-duplex | 100M/FULL | Down | False up |
| | 100M full-duplex | 100M/FULL | 100M/FULL | 100M/FULL |

When a negotiation mode of the base station is auto-negotiation and a negotiation rate is 1000 Mbit/s, if a negotiation mode and negotiation rate of a peer end are the same as those of the base station side, the port is up; or if a negotiation mode of a peer end is full-duplex and a negotiation rate is 1000 Mbit/s or 100 Mbit/s, the port is down.

When a negotiation mode of the base station is full-duplex and a negotiation rate is 1000 Mbit/s, if a negotiation mode and negotiation rate of a peer end are the same as those of the base station side, the port is up. If a negotiation mode of a peer end is auto-negotiation and a negotiation rate is 1000 Mbit/s, the base station is up and the peer end is down. In other words, a false up status occurs. In this case, the base station needs to continue poll probe, and send a probe request packet when the port is up, to determine whether the port is falsely up. If a negotiation mode of a peer end is full-duplex and a negotiation rate is 100 Mbit/s, the port is down.

When a negotiation mode of the base station is full-duplex and a negotiation rate is 100 Mbit/s, if a negotiation mode and negotiation rate of a peer end are the same as those of the base station side, the port is up. If a negotiation mode of a peer end is auto-negotiation and a negotiation rate is 1000 Mbit/s, the port is down. If a negotiation mode of a peer end is full-duplex and a negotiation rate is 1000 Mbit/s, the base station is up and the peer end is down. In other words, a false up status occurs. In this case, the base station needs to continue poll probe, and send a probe request packet when the port is up, to determine whether the port is falsely up.

In the embodiment shown in FIG. 2, the base station may first establish a management channel connection to the network management system, to obtain association information of an upper-layer service from the network management system based on the management channel connection, so that the upper-layer service is configured. Based on different application scenarios such as a PnP scenario or a local deployment scenario, the management channel connection between the base station and the network management system may be established in different manners. The following describes establishing the management channel connection between the base station and the network management system in different scenarios.

Because planning and configuration of base station transmission are not required, the network management system does not need to configure transmission parameters related to the base station. As a result, the base station and the network management system cannot detect IPs of each other. Therefore, in the PnP scenario, the base station and the network management system may exchange an MP IP of a peer end by converting a multicast packet into a unicast packet by using a DHCP multicast packet and a router DHCP relay. In this way, the management channel connection can be established based on the exchanged MP IP.

The DHCP packet specifically includes four types of packets: solicit, advertise, request, and reply. When the DHCP packet is used for exchange, two message exchanges of the DHCPv6 may be used, or four message exchanges of the DHCPv6 may be used. This is not limited in this embodiment.

It should be noted that, during MP IP exchange, the base station may serve as a DHCP client and the network management system may serve as a DHCP server. The network management system notifies the base station of an MP IP of the network management system, so that the base station establishes the management channel connection between the base station and the network management system based on the MP IP of the network management system. Alternatively, the base station may serve as a DHCP server, and the network management system serves as a DHCP client. The base station notifies the network management system of an MP IP of the base station, to establish the management channel connection between the base station and the network management system.

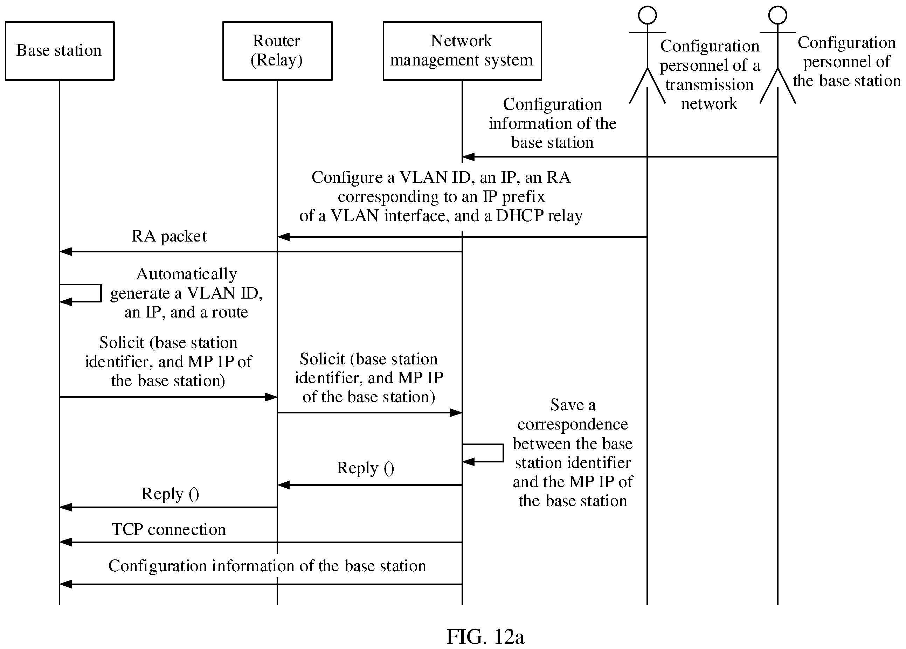

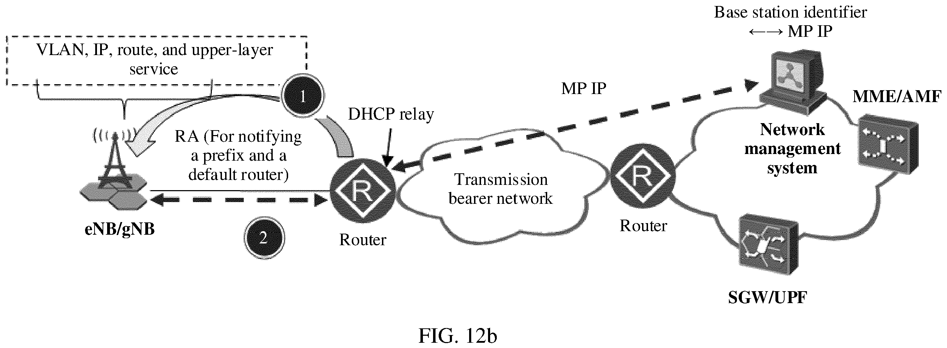

Refer to a signaling flowchart of establishing a management channel connection shown in FIG. 12a and a communication method flowchart shown in FIG. 12b. In the example, the base station notifies the network management system of an MP IP of the base station, to establish a management channel connection between the base station and the network management system. The method specifically includes the following steps.
1. Configuration personnel of the base station configure configuration information of the base station on the network management system.
   The configuration information includes a VLAN planning rule for the base station, and the planning rule specifically includes a correspondence between a VLAN and a service.
2. Configuration personnel of the transmission network configure the following information corresponding to a base station transmission interface on the router: a VLAN ID, an IP, an RA corresponding to an IP prefix of a VLAN interface, and a DHCP relay.
   A server IP of the DHCP relay is a network management system IP. In this way, the router can convert a multicast packet into a unicast packet whose destination address is the network management system IP.
3. The router periodically advertises RAs to notify the base station of information such as a prefix corresponding to the RA.
4. After receiving the RA, the base station automatically generates a VLAN ID, an interface IP, and a route.

Specifically, a value of a VLAN ID parameter of a VLAN interface is an invalid value. For example, when the value is 0, it indicates that the VLAN ID is automatically generated. In this case, the base station automatically generates the VLAN ID based on a VLAN ID corresponding to the RA packet.

Then, the base station may automatically generate a global unicast address as the interface IP based on a network address prefix of the RA packet received on the VLAN interface by using a stateless address autoconfiguration mechanism, and determine corresponding VRF based on the VLAN ID of the RA packet. Then, for each VRF, the base station uses a source address of the RA packet as a next-hop address of a default route, and generates the default route based on a destination address ::0/0 and the next-hop address of the default route.

Certainly, the base station may alternatively use the interface IP automatically generated for the VLAN interface as a source address, and use a source address of the RA packet as a next-hop address of a source address route, to generate the source address route based on the source address and the next-hop address of the source address route.

5. The base station uses a VLAN that receives the RA in step 4, to send a DHCP request multicast packet for each VLAN interface.

When the DHCP request multicast packet is sent on the VLAN interface, the DHCP request multicast packet carries a global unicast address generated by the corresponding VLAN interface. That is, an interface IP corresponding to the VLAN ID generated based on the RA packet is used as a temporary MP IP of the base station. In actual application, the base station may write a base station identifier and the MP IP of the base station into an option field, to generate the DHCP request multicast packet.

6. The router converts the DHCP request multicast packet into a request unicast packet by using the DHCP relay, and sends the packet to the network management system.

The request multicast packet and the request unicast packet may be specifically solicit packets.

7. After receiving the DHCP request unicast packet, the network management system saves a mapping between the base station identifier and the MP IP of the base station, and returns a DHCP response packet.

The response packet may be specifically a reply packet.

8. The network management system connects to the base station, and establishes the management channel connection.

During specific implementation, the network management system may initiate a TCP connection, and the base station responds to the connection, to establish the management channel connection between the base station and the network management system. It should be noted that the network management system may alternatively initiate a stream control transmission protocol (Stream Control Transmission Protocol, SCTP) connection, to establish the management channel connection between the base station and the network management system.

9. The network management system delivers the configuration information of the base station to the base station by using the management channel connection.

Specifically, the base station may implement upper-layer service configuration based on association information of an upper-layer service in the configuration information, namely, a correspondence between the upper-layer service and the VLAN interface.

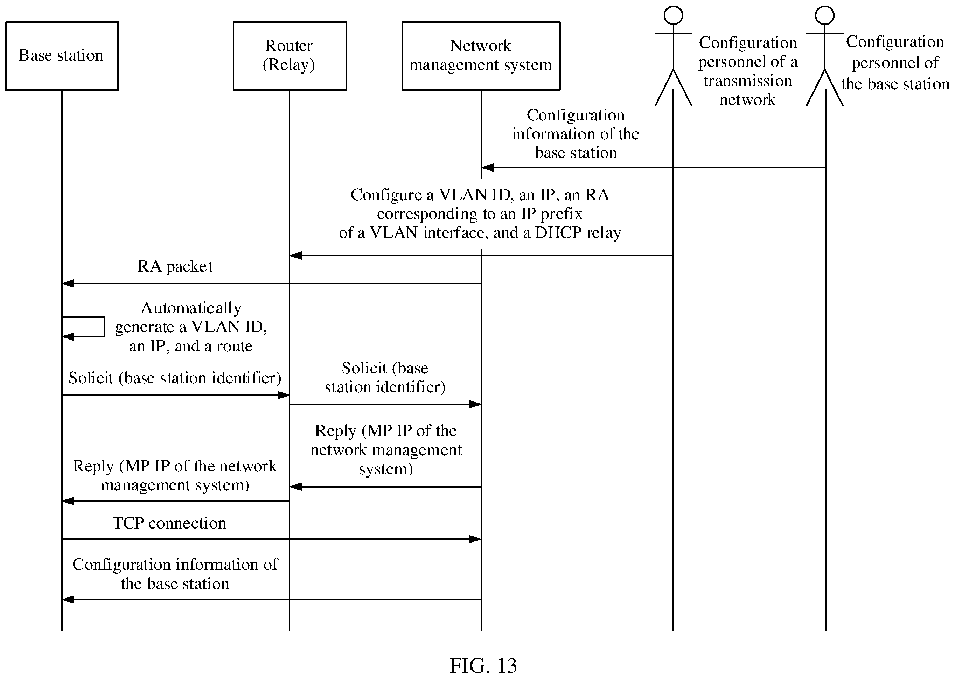

Next, refer to a signaling flowchart of establishing a management channel connection shown in FIG. 13. In the example, the network management system notifies the base station of an MP IP of the network management system, to establish a management channel connection between the base station and the network management system. The method specifically includes the following steps.
1. Configuration personnel of the base station configure configuration information of the base station on the network management system.
2. Configuration personnel of the transmission network configure the following information corresponding to a base station transmission interface on the router: a VLAN ID, an IP, an RA corresponding to an IP prefix of a VLAN interface, and a DHCP relay.
3. The router periodically advertises RAs to notify the base station of information such as a prefix corresponding to the RA.
4. After receiving the RA, the base station automatically generates a VLAN ID, an interface IP, and a route.
   For a specific implementation of steps 1 to 4, refer to related content description in the embodiment shown in FIG. 12a. Details are not described herein again.
5. The base station uses a VLAN that receives the RA in step 4, to send a DHCP request multicast packet for each VLAN interface.
   When the DHCP request multicast packet is sent on the VLAN interface, a base station identifier is carried in an option field of the DHCP request multicast packet.
6. The router converts the DHCP request multicast packet into a request unicast packet by using the DHCP relay, and sends the packet to the network management system.
   The request multicast packet and the request unicast packet may be specifically solicit packets.
7. After receiving the DHCP request unicast packet, the network management system returns a DHCP response packet.
   An option field of the DHCP response packet carries the MP IP of the network management system. The response packet may be specifically a reply packet, which may be forwarded by the router and returned to the base station. It should be noted that the DHCP response packet may be specifically a DHCP response unicast packet, and may be converted into a DHCP response multicast packet by using the DHCP relay, and then sent to the base station.
8. After receiving the DHCP response packet, the base station establishes the management channel connection between the base station and the network management system based on the MP IP of the network management system.
   During specific implementation, the base station may initiate a TCP connection, to establish the management channel connection between the base station and the network management system.
9. The network management system delivers the configuration information of the base station to the base station by using the management channel connection.

In this way, the base station may implement upper-layer service configuration based on association information of an upper-layer service in the configuration information, namely, a correspondence between the upper-layer service and the VLAN interface.

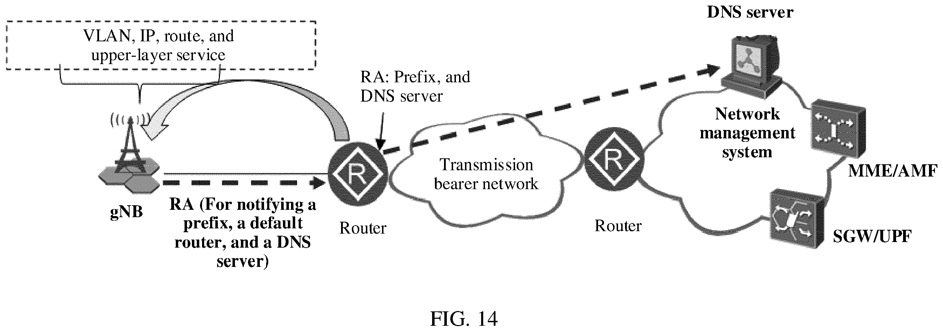

In some possible implementations, refer to FIG. 14. When configuring an RA on a route connected to the base station, configuration personnel of the transmission network may further specify a DNS server. Specifically, an address of the DNS server is configured as the MP IP of the network management system. In this way, when the base station receives the RA packet, in addition to automatically generating a global unicast address based on a prefix of the RA, the base station further connects to the DNS server to obtain the MP IP of the network management system. In this way, the base station may establish the management channel connection between the base station and the network management system based on the MP IP of the network management system.

Certainly, the base station may alternatively preset the MP IP of the network management system, for example, an MP IP that is of the network management system and that is preset when the base station is at delivery, or an MP IP that is of the network management system and that is configured in a local connection manner. The local connection manner includes inserting a USB flash drive, a memory card, Bluetooth, or the like. The base station may further establish the management channel connection between the base station and the network management system based on the preset MP IP of the network management system.

The following describes a specific implementation of establishing the management channel connection in a local deployment scenario. Embodiments of this application provide two implementations of establishing a management channel connection between the base station and the network management system.

In one implementation, the base station serves as a DHCP client, the network management system serves as a DHCP server, and an MP IP of the network management system is stored in configuration information of the base station. In this way, the base station can be connected to the network management system, to establish the management channel connection between the base station and the network management system.

In the other implementation, the network management system serves as a DHCP client, and the base station serves as a DHCP server. An interface IP of the base station is automatically generated by using a stateless address autoconfiguration mechanism, and the network management system does not sense the interface IP of the base station. Therefore, the base station needs to notify the network management system of the interface IP as an MP IP.

The base station notifies the network management system of the MP IP of the base station by using a DHCP relay. Specifically, the base station enables the DHCP relay, where a server IP of the DHCP relay is an MP IP of the network management system. Then, the base station sends a DHCP-based multicast packet, and converts the multicast packet into a unicast packet by using the DHCP relay. When receiving the unicast packet, the network management system may initiate a management channel connection establishment request based on the MP IP of the base station carried in an option field of the unicast packet. The base station establishes the management channel connection between the base station and the network management system in response to the management channel connection establishment request.

Certainly, the base station may alternatively send a DHCP unicast packet to the network management system directly, where an option field of the DHCP unicast packet carries a base station identifier and the MP IP of the base station. In this way, when receiving the unicast packet, the network management system may initiate a management channel connection establishment request based on the MP IP of the base station carried in the option field of the unicast packet. The base station establishes the management channel connection between the base station and the network management system in response to the management channel connection establishment request.

For ease of understanding, the following describes a specific implementation of establishing a management channel connection between a base station and a network management system in a local deployment scenario with reference to a specific example.

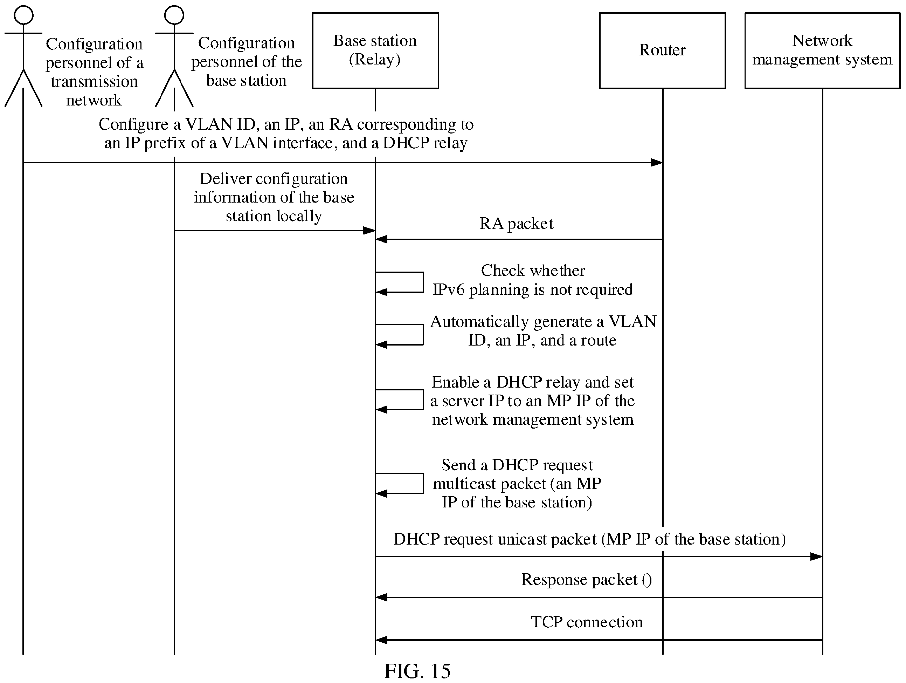

Refer to a signaling flowchart of establishing a management channel connection shown in FIG. 15. The method includes the following steps:
1. Configuration personnel of the base station locally configure preconfigured configuration information on the base station.
2. Configuration personnel of the transmission network configure the following information corresponding to a base station transmission interface on the router: a VLAN, an IP, and an RA corresponding to an IP prefix corresponding to a VLAN interface.
3. The router periodically advertises RAs to notify the base station of information such as a prefix corresponding to the RA.
4. After receiving the RA, the base station automatically generates a VLAN ID, an interface IP, and a route based on the RA.
   For specific implementation processes of configuring the information, configuring the VLAN, the IP, and the RA on the router, and generating the VLAN ID, the interface IP, and the route, refer to related content description in FIG. 12a.
5. The base station automatically enables a DHCP relay based on an MP IP of the network management system.
   A server IP of the DHCP relay is the MP IP of the network management system.
6. The base station uses a VLAN that receives the RA in step 4, to send a DHCP request multicast packet for each VLAN interface.
   When the DHCP request multicast packet is sent on the VLAN interface, the DHCP request multicast packet carries a global unicast address generated by the corresponding VLAN interface. That is, an interface IP corresponding to the VLAN ID generated based on the RA packet is used as an MP IP of the base station. In actual application, the base station may write a base station identifier and the MP IP of the base station into an option field, to generate the DHCP request multicast packet.
7. The base station converts the DHCP request multicast packet into a request unicast packet by using the internal DHCP relay and sends the packet to the network management system.

In some embodiments, the base station may not perform the foregoing steps 5 to 7, but send a DHCP unicast packet to the network management system directly, where an option field of the unicast packet carries a base station identifier and the MP IP of the base station. In this way, the MP IP of the base station can be notified to the network management system. 8. After receiving the DHCP request unicast packet, the network management system saves a mapping between the base station identifier and the MP IP of the base station, and returns a DHCP response packet.

9. The network management system connects to the base station, and establishes the management channel connection.

10. The network management system delivers the configuration information of the base station to the base station by using the management channel connection.

For steps 8 to 10, refer to related content description in the embodiment shown in FIG. 12a. Details are not described herein again.

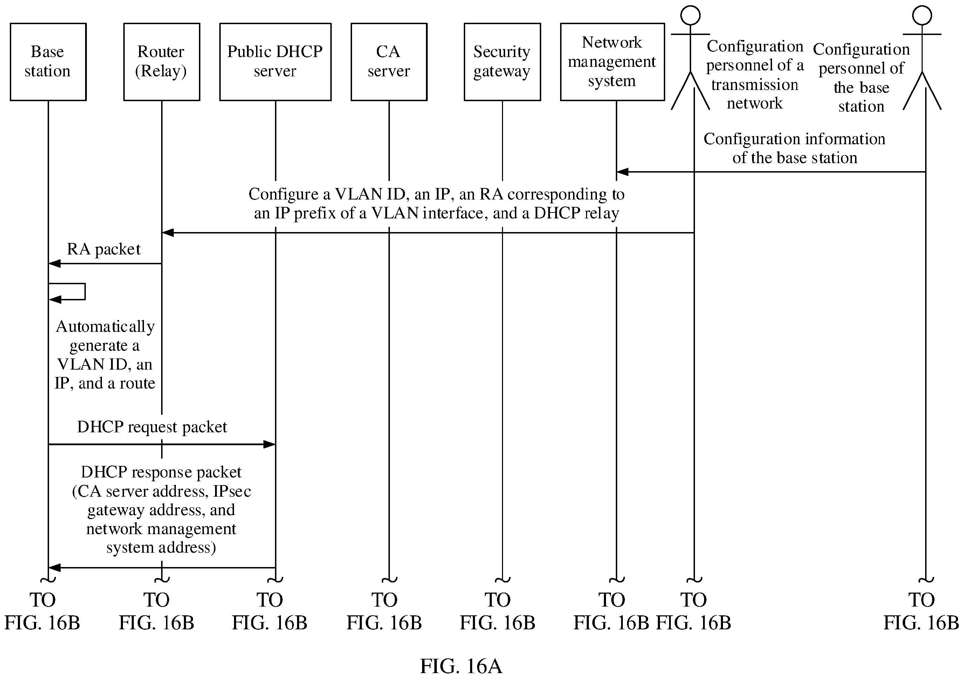

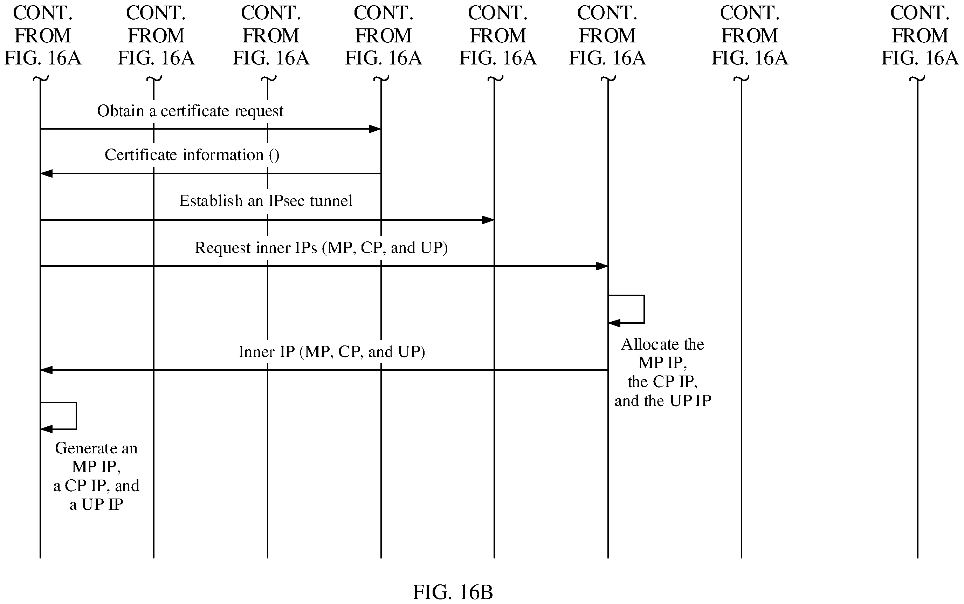

An embodiment of this application further provides an implementation of establishing a management channel connection between the base station and the network management system in a security scenario. Refer to a signaling flowchart of establishing a management channel connection shown in FIG. 16A and FIG. 16B. The method includes the following steps.
1. Configuration personnel of the base station locally configure preconfigured configuration information on the base station.
2. Configuration personnel of the transmission network configure the following information corresponding to a base station transmission interface on the router: a VLAN, an IP, and an RA corresponding to an IP prefix corresponding to a VLAN interface.
3. The router periodically advertises RAs to notify the base station of information such as a prefix corresponding to the RA.
4. After receiving the RA, the base station automatically generates a VLAN ID, an interface IP, and a route based on the RA.
5. The base station uses a VLAN that receives the RA in step 4, to send a DHCP request multicast packet for each VLAN interface.
6. A public DHCP server receives the DHCP request multicast packet, and returns a DHCP response packet.
   The response packet carries a CA server address, an address of a security gateway, and a network management system address.
7. The base station obtains a CA certificate from a CA server based on the CA server address.
8. The base station establishes an IKE connection based on the address of the security gateway in the DHCP response packet and a global unicast address generated in step 4, to establish an IPsec tunnel between the base station and the security gateway.
   During specific implementation, the base station may attempt to create the IKE connection by traversing the global unicast address generated in step 4.
9. The base station sends an address allocation request packet to the network management system based on the network management system address in the DHCP response packet, to request MP, CP, and UP addresses.
   The address allocation request packet is encrypted by using IPsec.
10. The network management system allocates the MP IP, CP IP, and UP IP to the base station in corresponding service address pools, and returns the MP IP, CP IP, and UP IP to the base station.
11. The base station generates a corresponding link connection based on the MP IP, CP IP, and UP IP allocated by the network management system.

It can be learned that, according to the method provided in some embodiments of this application, the management channel connection between the base station and the network management system may be automatically established. In this way, after the VLAN ID, the interface IP, and the route are automatically generated based on the RA packet, the VLAN and IP of the upper-layer service may be automatically determined based on the association information of the upper-layer service delivered by the network management system by using the management channel connection, and the interface IP for the VLAN interface and the VLAN ID that are generated in advance.

The foregoing describes a communication method in this application, and the following describes a communication apparatus that performs the foregoing communication method. The communication apparatus provided in this embodiment of this application may be specifically an apparatus inside a base station, or may be an apparatus that is separately from the base station and that can be connected to the base station. The communication apparatus has a function of implementing the communication method provided in any one of embodiments corresponding to FIG. 3 to FIG. 16B. The function may be implemented by hardware, or may be implemented by hardware executing corresponding software. The hardware or the software includes one or more modules corresponding to the foregoing functions, and the module may be software and/or hardware.

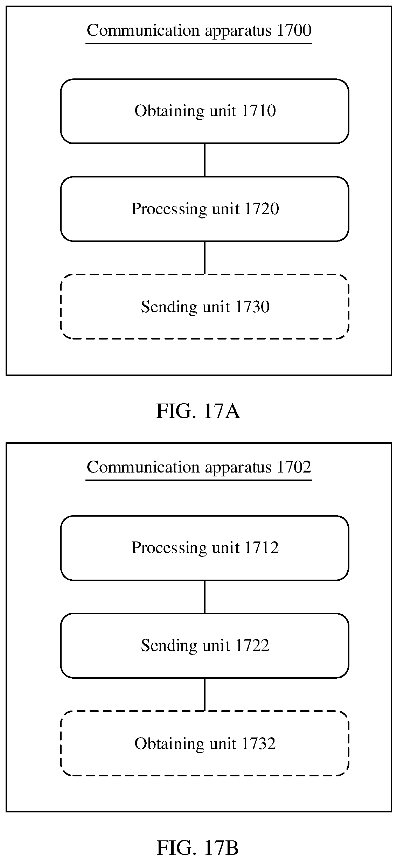

In some implementations, as shown in FIG. 17A, the communication apparatus 1700 includes:
an obtaining unit 1710, configured to receive a router advertisement packet; and
a processing unit 1720, configured to generate a virtual local area network identifier, an interface network address, and a route based on the router advertisement packet.

The obtaining unit 1710 is further configured to obtain association information of an upper-layer service, where the upper-layer service includes a management plane service, a control plane service, and a user plane service.

The processing unit 1720 is further configured to determine a virtual local area network and a network address of the upper-layer service based on the association information.

During specific implementation, the obtaining unit 1710 may be specifically configured to perform the method in S301 and S302. For details, refer to the description of S301 and S302 in the method embodiment shown in FIG. 3. The processing unit 1720 may be specifically configured to perform the method in S301 and S303. For details, refer to the description of S301 and S303 in the method embodiment shown in FIG. 3. Details are not described herein again.

Optionally, the processing unit 1720 is further configured to:
establish a management channel connection between a base station and a network management system.

The obtaining unit 1710 is specifically configured to:
obtain the association information of the upper-layer service from the network management system based on the management channel connection.

During specific implementation, the processing unit 1720 is configured to establish the management channel connection. For details, refer to related content description in embodiments shown in FIG. 12a to FIG. 16B. The obtaining unit 1710 may be specifically configured to perform the method in S302. For details, refer to the description of S302 in the method embodiment shown in FIG. 3.

Optionally, the association information includes a virtual local area network usage rule for the base station.

The processing unit 1720 is specifically configured to:
determine the virtual local area network and the network address of the upper-layer service according to the virtual local area network usage rule for the base station and based on the virtual local area network identifier and the interface network address that are generated in advance.

During specific implementation, the processing unit 1720 may be configured to perform the method in S303. For details, refer to the description of S303 in the method embodiment shown in FIG. 3.

Optionally, the association information further includes a correspondence between the upper-layer service and a virtual local area network interface.

The processing unit 1720 is specifically configured to:
determine the virtual local area network of the upper-layer service according to the virtual local area network usage rule for the base station and based on the virtual local area network identifier generated in advance; and
determine a virtual local area network interface corresponding to the virtual local area network of the upper-layer service based on the virtual local area network of the upper-layer service and the correspondence between the upper-layer service and the virtual local area network interface, and determine the interface network address generated on the virtual local area network interface in advance as the network address of the upper-layer service.

During specific implementation, the processing unit 1720 may be configured to perform the method in S303. For details, refer to the description of S303 in the method embodiment shown in FIG. 3.

Optionally, the processing unit 1720 is specifically configured to:
establish the management channel connection based on a management plane network address of a peer end, where the management plane network address of the peer end may be obtained by using a DHCP relay for the packet.

Optionally, the apparatus 1700 further includes a sending unit 1730.

The sending unit 1730 is configured to send a dynamic host configuration protocol request multicast packet for each virtual local area network interface. An option field of the dynamic host configuration protocol request multicast packet carries a base station identifier of the base station and a management plane network address of the base station. The management plane network address of the base station is the interface network address generated based on a router solicitation packet and that corresponds to the virtual local area network identifier.

During specific implementation, for a specific implementation in which the sending unit 1730 sends the MP IP of the base station to the network management system, refer to related content description in the embodiment shown in FIG. 12a and FIG. 12b.

Optionally, the apparatus 1700 further includes a sending unit 1730.

The sending unit 1730 is configured to send a dynamic host configuration protocol request multicast packet for each virtual local area network interface. An option field of the dynamic host configuration protocol request multicast packet carries a base station identifier.

The obtaining unit 1710 is further configured to receive a response multicast packet converted, by using the dynamic host configuration protocol relay, from a dynamic host configuration protocol response unicast packet sent by the network management system when receiving the request unicast packet. An option field of the dynamic host configuration protocol response multicast packet carries a management plane network address of the network management system.

During specific implementation, the sending unit 1730 sends the request multicast packet, and the obtaining unit 1710 receives the response multicast packet, to obtain the MP IP of the network management system. For a specific implementation, refer to related content description in the embodiment shown in FIG. 13.

Optionally, a domain name system server address field of the router advertisement packet may be configured as a management plane network address of the network management system.

The obtaining unit 1710 is specifically configured to:
access a domain name system server to obtain the management plane network address of the network management system.

The processing unit 1720 is configured to:
establish the management channel connection between the base station and the network management system based on the management plane network address of the network management system.

During specific implementation, the processing unit 1720 establishes the management channel connection based on the domain name system server. For a specific implementation, refer to related content description in the embodiment shown in FIG. 14.

Optionally, the processing unit 1720 is specifically configured to:
establish the management channel connection between the base station and the network management system based on a preset management plane network address of the network management system.

Optionally, the preset management plane network address includes:
a management plane network address that is of the network management system and that is preset when the base station is at delivery or configured in a local connection manner.

Optionally, in a local deployment scenario, the base station serves as a server. The apparatus 1700 further includes a sending unit 1730.

The processing unit 1720 is configured to enable a dynamic host configuration protocol relay, where a service address of the relay is a management plane network address of the network management system.

The sending unit 1730 is configured to send a dynamic host configuration protocol-based multicast packet.

The processing unit 1720 is further configured to convert the multicast packet into a unicast packet by using the dynamic host configuration protocol relay. An option field of the unicast packet carries a management plane network address of the base station.

The obtaining unit 1710 is further configured to receive a management channel connection establishment request from the network management system.

The processing unit 1720 is further configured to establish the management channel connection between the base station and the network management system based on the management channel connection establishment request.

Alternatively, the sending unit 1730 is configured to send a dynamic host configuration protocol-based unicast packet. An option field of the unicast packet carries a management plane network address of the base station.

The obtaining unit 1710 is further configured to receive a management channel connection establishment request from the network management system.

The processing unit 1720 is further configured to establish the management channel connection between the base station and the network management system based on the management channel connection establishment request.

During specific implementation, the communication apparatus 1700 notifies the network management system of the MP IP of the base station by using a DHCP relay, or notifies the network management system of the MP IP of the base station by directly sending the unicast packet to the network management system, to establish the management channel connection. For a specific implementation, refer to related content description of the embodiment shown in FIG. 15.

Optionally, the obtaining unit 1710 is specifically configured to:
receive a link layer discovery protocol packet; and
obtain the association information of the upper-layer service based on a virtual local area network identifier field and a service field in the link layer discovery protocol packet, where the association information includes an upper-layer service applicable to a virtual local area network identified by the virtual local area network identifier field.

The processing unit 1720 is specifically configured to:
determine the virtual local area network and the network address of the upper-layer service based on the upper-layer service applicable to the virtual local area network identified by the virtual local area network identifier field, and the virtual local area network identifier and the interface network address that are generated in advance.

During specific implementation, the obtaining unit 1710 is configured to perform the method in S302, and the processing unit 1720 is configured to perform the method in S303. For details, refer to the description of the S302 and S303 in the method embodiment shown in FIG. 3 and related content description of the embodiment shown in FIG. 8.

Optionally, the upper-layer service further includes an internet key exchange service, the association information includes a virtual local area network usage rule and an address allocation message that are delivered by the network management system for the base station by using the management channel connection, and the address allocation message includes a management plane network address, a control plane network address, and a user plane network address that are allocated by the network management system to the base station based on respective address pools corresponding to the management plane service, the control plane service, and the user plane service.

The processing unit 1720 is specifically configured to:
determine a virtual local area network and a network address of the internet key exchange service according to the virtual local area network usage rule for the base station and based on the virtual local area network identifier and the interface network address that are generated in advance; and
determine the management plane network address, the control plane network address, and the user plane service network address of the base station based on the address allocation message.

During specific implementation, the processing unit 1720 is configured to perform the method in S303. For details, refer to the description of S303 in the method embodiment shown in FIG. 3 and related content description in the embodiment shown in FIG. 16A and FIG. 16B.

Optionally, the apparatus 1700 further includes the sending unit 1730.

The sending unit 1730 is configured to send a probe request packet.

The processing unit 1720 is further configured to: when a response probe advertisement packet is received within a preset time period, determine that a physical port is in an up state; or when no probe advertisement packet is received within a preset time period, determine that a physical port is in a false up state, and update a negotiation mode and a negotiation rate of the physical port.

The sending unit 1730 is further configured to continue to send the probe request packet based on an updated negotiation mode and negotiation rate until the probe advertisement packet is received.

During specific implementation, the processing unit 1720 is configured to determine, in a self-detection manner, whether the port is in an up state. For a specific implementation, refer to related content description in the embodiment shown in FIG. 3.

Optionally, the processing unit 1720 is specifically configured to:
automatically generate the virtual local area network identifier based on a virtual local area network identifier of the router advertisement packet received through the physical port; and
automatically generate a global unicast address as the interface network address by using a stateless address autoconfiguration mechanism based on a network address prefix carried in the router advertisement packet.

During specific implementation, the processing unit 1720 is configured to perform the method in S301. For details, refer to the description of S301 in the method embodiment shown in FIG. 3 and related content description in the embodiments shown in FIG. 5 and FIG. 6.

Optionally, the processing unit 1720 is specifically configured to:
determine corresponding virtual routing and forwarding based on the virtual local area network identifier of the router advertisement packet or a physical port identifier corresponding to the physical port that receives the router advertisement packet, and generate a default route for each virtual routing and forwarding, where the default route includes a destination address and a next-hop address of the default route, and the next-hop address of the default route is a source address of the router advertisement packet; or
use the interface network address automatically generated for the virtual local area network interface as a source address, and use a source address of the router advertisement packet as a next-hop address of a source address route, to generate the source address route.

During specific implementation, the processing unit 1720 is configured to perform the method in S301. For details, refer to the description of S301 in the method embodiment shown in FIG. 3 and related content description in the embodiment shown in FIG. 7.

An embodiment of this application further provides another communication apparatus for performing the foregoing communication method. The communication apparatus provided in this embodiment of this application may be specifically an apparatus inside a network management system, or may be an apparatus that is separately from the network management system and that can be connected to the network management system. The communication apparatus has a function of implementing the communication method provided in any one of embodiments corresponding to FIG. 3 to FIG. 16B. The function may be implemented by hardware, or may be implemented by hardware executing corresponding software. The hardware or the software includes one or more modules corresponding to the foregoing functions, and the module may be software and/or hardware.

In some embodiments, as shown in FIG. 17B, the communication apparatus 1702 includes a processing unit 1712 and a sending unit 1722.

The processing unit 1712 is configured to establish a management channel connection to a base station.

The sending unit 1722 is configured to deliver association information of an upper-layer service to the base station by using the management channel connection, where the upper-layer service includes a management plane service, a control plane service, and a user plane service, and the association information is used by the base station to determine a virtual local area network and a network address of the upper-layer service.

Optionally, the processing unit 1712 is specifically configured to:
establish the management channel connection to the base station based on a management plane network address of a peer end, where the management plane network address of the peer end is obtained by using a dynamic host configuration protocol relay packet.

In some embodiments, the apparatus may further receive a management plane network address of the base station, and send a management channel connection establishment request to the base station, to establish the management channel connection.

Specifically, the apparatus 1702 further includes an obtaining unit 1732. The obtaining unit 1732 is configured to receive a request unicast packet, where the request unicast packet is generated by a router by converting a dynamic host configuration protocol request multicast packet by using a dynamic host configuration protocol relay, and the dynamic host configuration protocol request multicast packet is sent by the base station for each virtual local area network interface. An option field of the dynamic host configuration protocol request multicast packet carries a base station identifier of the base station and the management plane network address of the base station.

In some other embodiments, the apparatus may send a management plane network address of a network management system to the base station. The base station sends a management channel connection establishment request based on the management plane network address of the network management system. The apparatus establishes the management channel connection based on the management channel connection establishment request.

Specifically, the apparatus 1702 further includes an obtaining unit 1732. The obtaining unit 1732 is configured to receive a request unicast packet, where the request unicast packet is generated by a router by converting a dynamic host configuration protocol request multicast packet by using a dynamic host configuration protocol relay, and the dynamic host configuration protocol request multicast packet is sent by the base station for each virtual local area network interface. An option field of the dynamic host configuration protocol request multicast packet carries a base station identifier of the base station.

Then, the sending unit 1722 sends a dynamic host configuration protocol response unicast packet, where the dynamic host configuration protocol response unicast packet is converted by a router by using a dynamic host configuration protocol relay to obtain a response multicast packet. An option field of the response multicast packet carries a management plane network address of the network management system.

Optionally, in a local deployment scenario, the base station serves as a server. The apparatus 1702 further includes an obtaining unit 1732.

The obtaining unit 1732 is configured to receive a unicast packet, where an option field of the unicast packet carries a management plane network address of the base station, and the unicast packet is obtained by the base station by enabling a dynamic host configuration protocol relay and converting a dynamic host configuration protocol-based multicast packet or is directly generated by the base station.

The sending unit 1722 is further configured send a management channel connection establishment request to the base station based on the management plane network address of the base station.

The communication apparatus 1702 according to this embodiment of this application may correspondingly perform the method described in embodiments of this application. In addition, the foregoing and other operations and/or functions of the modules/units of the communication apparatus 1702 are intended to implement corresponding procedures of the methods in embodiments shown in FIG. 12a, FIG. 13, FIG. 15, FIG. 16A, and FIG. 16B. For brevity, details are not described herein again.

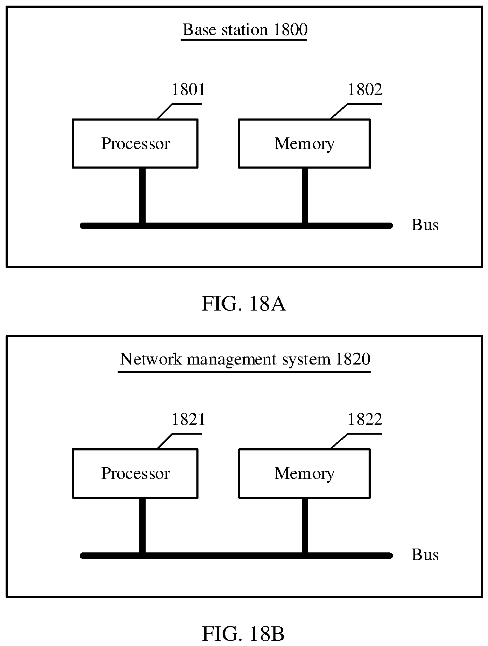

In addition, an embodiment of this application further provides a device. The device may be specifically a base station. FIG. 18A is a schematic diagram of a structure of a base station according to an embodiment of this application. The base station 1800 includes a processor 1801 and a memory 1802. The memory 1802 is configured to store program code. The processor 1801 is configured to invoke the program code in the memory to perform the communication method provided in FIG. 3.

During specific implementation, the processor 1801 is configured to implement the following operations:
receiving a router advertisement packet, and generating a virtual local area network identifier, an interface network address, and a route based on the router advertisement packet;
obtaining association information of an upper-layer service, where the upper-layer service includes a management plane service, a control plane service, and a user plane service; and
determining a virtual local area network and a network address of the upper-layer service based on the association information.

Optionally, the processor 1801 is further configured to implement the following operation:
establishing a management channel connection between the base station and a network management system.

Correspondingly, the processor 1801 is specifically configured to perform the following operation:
obtaining the association information of the upper-layer service from the network management system based on the management channel connection.

Optionally, the association information includes a correspondence between the upper-layer service and a virtual local area network interface.

The processor 1801 is specifically configured to perform the following operation:
determining the virtual local area network and the network address of the upper-layer service based on the correspondence between the upper-layer service and the virtual local area network interface, and the virtual local area network identifier and the interface network address that are generated in advance.

Optionally, the association information includes a virtual local area network usage rule for the base station.

The processor 1801 is specifically configured to perform the following operation:
determining the virtual local area network and the network address of the upper-layer service according to the virtual local area network usage rule for the base station and based on the virtual local area network identifier and the interface network address that are generated in advance.

Optionally, the processor 1801 is specifically configured to perform the following operations:
exchanging a management plane network address of a peer end with the network management system by converting a multicast packet into a unicast packet by using a dynamic host configuration protocol relay; and
establishing the management channel connection between the base station and the network management system based on the management plane network address of the peer end.

Optionally, the processor 1801 is specifically configured to perform the following operation:
sending a dynamic host configuration protocol request multicast packet for each virtual local area network interface, where an option field of the dynamic host configuration protocol request multicast packet carries a base station identifier of the base station and a management plane network address of the base station, and the management plane network address of the base station is the interface network address generated based on a router solicitation packet and that corresponds to the virtual local area network identifier.

Optionally, the processor 1801 is specifically configured to perform the following operations:
sending a dynamic host configuration protocol request multicast packet for each virtual local area network interface, where an option field of the dynamic host configuration protocol request multicast packet carries a base station identifier; and
receiving a response multicast packet converted, by using the dynamic host configuration protocol relay, from a dynamic host configuration protocol response unicast packet sent by the network management system when receiving the request unicast packet, where an option field of the dynamic host configuration protocol response multicast packet carries a management plane network address of the network management system.

Optionally, a domain name system server address field of the router advertisement packet is configured as a management plane network address of the network management system.

The processor 1801 is specifically configured to perform the following operations:
accessing a domain name system server to obtain the management plane network address of the network management system; and
establishing the management channel connection between the base station and the network management system based on the management plane network address of the network management system.

Optionally, the processor 1801 is specifically configured to perform the following operation:
establishing the management channel connection between the base station and the network management system based on a preset management plane network address of the network management system.

Optionally, the preset management plane network address of the network management system includes a management plane network address that is of the network management system and that is preset when the base station is at delivery or configured in a local connection manner.

Optionally, in a local deployment scenario, the processor 1801 is specifically configured to perform the following operations:
enabling a dynamic host configuration protocol relay, where a service address of the relay is a management plane network address of the network management system;
sending a dynamic host configuration protocol-based multicast packet, where an option field of the unicast packet carries a management plane network address of the base station; and
receiving a management channel connection establishment request from the network management system, and establishing the management channel connection between the base station and the network management system; or
sending a dynamic host configuration protocol-based unicast packet, where an option field of the unicast packet carries a management plane network address of the base station; and
receiving a management channel connection establishment request from the network management system, and establishing the management channel connection between the base station and the network management system.

Optionally, the processor 1801 is specifically configured to perform the following operations:
receiving a link layer discovery protocol packet; and
determining the association information of the upper-layer service based on a virtual local area network identifier field and a service field in the link layer discovery protocol packet, where the association information includes an upper-layer service applicable to a virtual local area network identified by the virtual local area network identifier field; and
determining the virtual local area network and the network address of the upper-layer service based on the upper-layer service applicable to the virtual local area network identified by the virtual local area network identifier field, and the virtual local area network identifier and the interface network address that are generated in advance.

Optionally, the upper-layer service further includes an internet key exchange service, and the association information includes a correspondence between the internet key exchange service and a virtual local area network interface.

The processor 1801 is specifically configured to perform the following operation:
determining a virtual local area network and a network address of the internet key exchange service based on the correspondence between the internet key exchange service and the virtual local area network interface, the virtual local area network identifier and the interface network address that are generated in advance.

Optionally, the processor 1801 is further configured to perform the following operations:
sending a probe request packet; and
when a response probe advertisement packet is received within a preset time period, determining that a physical port is in an up state; or when no probe advertisement packet is received within a preset time period, determining that a physical port is in a false up state, and continuing to perform probe until the probe advertisement packet is received.

Optionally, the processor 1801 is specifically configured to perform the following operations:
automatically generating a corresponding virtual local area network identifier based on a virtual local area network identifier of the router advertisement packet received through the physical port; and
automatically generating a global unicast address as the interface network address by using a stateless address autoconfiguration mechanism based on a network address prefix carried in the router advertisement packet.

Optionally, the processor 1801 is specifically configured to perform the following operation:
determining corresponding virtual routing and forwarding based on the virtual local area network identifier of the router advertisement packet or a physical port identifier corresponding to the physical port that receives the router advertisement packet, and generating a default route for each virtual routing and forwarding, where the default route includes a destination address and a next-hop address of the default route, and the next-hop address of the default route is a source address of the router advertisement packet.

Optionally, the processor 1801 is specifically configured to perform the following operation:
using the interface network address automatically generated for the virtual local area network interface as a source address, and using a source address of the router advertisement packet as a next-hop address of a source address route, to generate the source address route.

An embodiment of this application further provides a device. The device may be specifically a network management system. FIG. 18B is a schematic diagram of a structure of a network management system according to an embodiment of this application. The network management system 1820 includes a processor 1821 and a memory 1822. The memory 1822 is configured to store program code. The processor 1821 is configured to invoke the program code in the memory to perform the communication method provided in FIG. 12a, FIG. 13, FIG. 15, FIG. 16A, and FIG. 16B.

During specific implementation, the processor 1821 is configured to implement the following operation:
establishing a management channel connection to a base station, and then delivering association information of an upper-layer service to the base station by using the management channel connection. The upper-layer service includes a management plane service, a control plane service, and a user plane service, and the association information is used by the base station to determine a virtual local area network and a network address of the upper-layer service.

Optionally, the processor 1821 is specifically configured to implement the following operations:
exchanging a management plane network address of a peer end with the base station by converting a multicast packet into a unicast packet by using a dynamic host configuration protocol relay; and
establishing the management channel connection to the base station based on the management plane network address of the peer end.

According to the method, the management channel connection can be automatically established, to reduce labor costs.

Optionally, the network management system may receive a notification from the base station, to obtain a management plane network address of the base station. Specifically, the processor 1821 is configured to implement the following operation:
receiving a request unicast packet, where the request unicast packet is generated by a router by converting a dynamic host configuration protocol request multicast packet by using the dynamic host configuration protocol relay. The dynamic host configuration protocol request multicast packet is sent by the base station for each virtual local area network interface. An option field of the dynamic host configuration protocol request multicast packet carries a base station identifier of the base station and a management plane network address of the base station. In this way, the base station notifies the network management system of the management plane network address of the base station.

Optionally, the network management system may notify the base station of a management plane network address of the network management system. Specifically, the processor 1821 is configured to implement the following operations:
receiving a request unicast packet, where the request unicast packet is generated by a router by converting a dynamic host configuration protocol request multicast packet by using the dynamic host configuration protocol relay, the dynamic host configuration protocol request multicast packet is sent by the base station for each virtual local area network interface, and an option field of the dynamic host configuration protocol request multicast packet carries a base station identifier of the base station; and
sending a dynamic host configuration protocol response unicast packet, where the dynamic host configuration protocol response unicast packet is converted by a router by using the dynamic host configuration protocol relay to obtain a response multicast packet, and an option field of the response multicast packet carries the management plane network address of the network management system. In this way, the network management system notifies the base station of the management plane network address of the network management system.

Optionally, in a local deployment scenario, the base station serves as a server. The processor 1821 is specifically configured to implement the following operation:
receiving a unicast packet. An option field of the unicast packet carries a management plane network address of the base station. The unicast packet is obtained by the base station by enabling a dynamic host configuration protocol relay and converting a dynamic host configuration protocol-based multicast packet or is directly generated by the base station.

In this way, the network management system sends a management channel connection establishment request to the base station based on the management plane network address of the base station. The management channel connection is automatically established, so that base station transmission planning is not required.

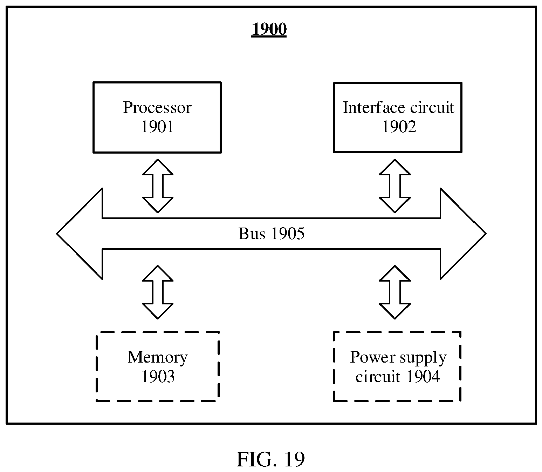

An embodiment of this application further provides an apparatus 1900. The following specifically describes a structure and a function of the apparatus 1900 with reference to a schematic block diagram of the apparatus 1900, that is, FIG. 19. The apparatus may include at least one processor 1901 and an interface circuit 1902. When related program instructions are executed in the at least one processor 1901, the apparatus 1900 is enabled to implement the communication method provided in the method embodiments shown in FIG. 3 to FIG. 16B. The interface circuit 1902 may be configured to receive the program instructions and transmit the program instructions to the processor. Alternatively, the interface circuit 1902 may be configured to perform communication interaction between the apparatus 1900 and another communication device, for example, exchanging control signaling and/or service data. The interface circuit 1902 may be code and/or a data read and write interface circuit, or the interface circuit 1902 may be a signal transmission interface circuit between a communication processor and a transceiver. Optionally, the apparatus 1900 may further include at least one memory 1903, and the memory 1903 may be configured to store related program instructions and/or data that are/is required. Optionally, the apparatus 1900 may further include a power supply circuit 1904. The power supply circuit 1904 may be configured to supply power to the processor 1901. The power supply circuit 1904 and the processor 1901 may be located in a same chip, or located in another chip other than the chip on which the processor 1901 is located. Optionally, the apparatus 1900 may further include a bus 1905, and parts of the apparatus 1900 may be interconnected through the bus 1905.

It should be understood that, the processor in embodiments of this application may be a central processing unit (central processing unit, CPU). The processor may further be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory in embodiments of this application may be a volatile memory or a non-volatile memory, or may include a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The power supply circuit in embodiments of this application includes but is not limited to at least one of the following: a power supply line, a power supply subsystem, a power management integrated circuit, a power consumption management processor, or a power consumption management control circuit.

The transceiver apparatus, the interface circuit, or the transceiver in embodiments of this application may include a separate transmitter and/or a separate receiver, or the transmitter and the receiver may be integrated. The transceiver apparatus, the interface circuit, or the transceiver may work under an indication of a corresponding processor. Optionally, the transmitter may be corresponding to a transmitter in a physical device, and the receiver may be corresponding to a receiver in a physical device.

An embodiment of this application further provides a computer-readable storage medium. The computer-readable storage medium is configured to store program code, and the program code is used to perform the communication method in this application.

An embodiment of this application further provides a computer program product including computer-readable instructions. When the computer-readable instructions are run on a computer, the computer is enabled to perform the communication method in the foregoing aspects.

Persons skilled in the art may clearly understand that, for the purpose of convenient and brief description, for detailed working processes of the foregoing system, apparatuses, and units, refer to corresponding processes in the foregoing method embodiments. Details are not described herein again.

In the several embodiments provided in this application, it should be understood that the disclosed apparatus and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in an electronic, a mechanical, or another similar form.

The units described as separate parts may or may not be physically separate, and parts displayed as units may or may not be physical units, may be located in one location, or may be distributed on a plurality of network units. Some or all of the units may be selected depending on actual requirements to achieve the objectives of the solutions in embodiments.

It should be understood that, in this application, "at least one " means one or more, and "a plurality of means two or more. The term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally represents an "or" relationship between the associated objects. "At least one of the following items (pieces)" or a similar expression thereof indicates any combination of these items, including a single item (piece) or any combination of a plurality of items (pieces). For example, at least one (piece) of a, b, or c may represent: a, b, c, "a and b", "a and c", "b and c", or "a, b, and c", where a, b, and c may be singular or plural.

## Claims

1. A communication method, wherein the method is applied to a base station, and the method comprises:
receiving (S301) a router advertisement packet from a router, and generating (S301) a virtual local area network identifier, an interface network address, and a route based on the router advertisement packet;
obtaining (S302) association information of an upper-layer service, wherein the upper-layer service comprises a management plane service, a control plane service, and a user plane service; and
determining (S303) a virtual local area network and a network address of the upper-layer service based on the association information;
wherein the method further comprises:
establishing a management channel connection between the base station and a network management system; and
the obtaining (S302) association information of an upper-layer service comprises:
obtaining the association information of the upper-layer service from the network management system based on the management channel connection;
wherein the association information comprises a virtual local area network usage rule for the base station; and
the determining (S303) a virtual local area network and a network address of the upper-layer service based on the association information comprises:
determining the virtual local area network and the network address of the upper-layer service according to the virtual local area network usage rule for the base station and based on the virtual local area network identifier and the interface network address that are generated in advance;
wherein the generating (S301) a virtual local area network identifier, an interface network address, and a route based on the router advertisement packet comprises:
automatically generating the virtual local area network identifier based on a virtual local area network identifier of the router advertisement packet received through a physical port; and
automatically generating a global unicast address as the interface network address by using an internet protocol version 6, IPv6, stateless address autoconfiguration mechanism based on a network address prefix carried in the router advertisement packet.

2. The method according to claim 1, wherein the association information further comprises a correspondence between the upper-layer service and a virtual local area network interface; and
the determining (S303) a virtual local area network and a network address of the upper-layer service based on the association information comprises:
determining the virtual local area network of the upper-layer service according to the virtual local area network usage rule for the base station and based on the virtual local area network identifier generated in advance; and
determining a virtual local area network interface corresponding to the virtual local area network of the upper-layer service based on the virtual local area network of the upper-layer service and the correspondence between the upper-layer service and the virtual local area network interface, and determining the interface network address generated on the virtual local area network interface in advance as the network address of the upper-layer service.

3. The method according to claim 1 or 2, wherein the establishing a management channel connection between the base station and a network management system comprises:
exchanging, by the base station and the network management system, a management plane network address of a peer end by converting a multicast packet into a unicast packet by using a dynamic host configuration protocol relay; and
establishing the management channel connection between the base station and the network management system based on the management plane network address of the peer end.

4. The method according to claim 3, wherein the exchanging, by the base station and the network management system, a management plane network address of a peer end by converting a multicast packet into a unicast packet by using a dynamic host configuration protocol relay comprises:
sending a dynamic host configuration protocol request multicast packet for each virtual local area network interface, wherein an option field of the dynamic host configuration protocol request multicast packet carries a base station identifier of the base station and a management plane network address of the base station, and the management plane network address of the base station is the interface network address generated based on a router solicitation packet and that corresponds to the virtual local area network identifier.

5. The method according to claim 3, wherein the exchanging, by the base station and the network management system, a management plane network address of a peer end by converting a multicast packet into a unicast packet by using a dynamic host configuration protocol relay comprises:
sending a dynamic host configuration protocol request multicast packet for each virtual local area network interface, wherein an option field of the dynamic host configuration protocol request multicast packet carries a base station identifier; and
receiving a response multicast packet converted, by using the dynamic host configuration protocol relay, from a dynamic host configuration protocol response unicast packet sent by the network management system when receiving the request unicast packet, wherein an option field of the response multicast packet carries a management plane network address of the network management system.

6. The method according to claim 1 or 2, wherein a domain name system server address field of the router advertisement packet is configured as a management plane network address of the network management system; and
the establishing a management channel connection between the base station and a network management system comprises:
accessing a domain name system server to obtain the management plane network address of the network management system; and
establishing the management channel connection between the base station and the network management system based on the management plane network address of the network management system.

7. A base station (1800), wherein the base station (1800) comprises a processor (1801) and a memory (1802), wherein
the memory (1802) is configured to store program code and transmit the program code to the processor (1801); and
the processor (1802) is configured to perform, according to instructions in the program code, the method according to any one of claims 1 to 6.

8. A communication system comprising the base station (1800) according to claim 7 and a network management system (1820), wherein the network management system (1820) comprises a processor (1821) and a memory (1822), wherein
the memory (1822) is configured to store program code and transmit the program code to the processor (1821); and
the processor (1821) is configured to perform, according to instructions in the program code, a method comprising:
establishing a management channel connection to the base station (1800); and
delivering association information of an upper-layer service to the base station (1800) by using the management channel connection, wherein the upper-layer service comprises a management plane service, a control plane service, and a user plane service, and the association information is used by the base station (1800) to determine a virtual local area network and a network address of the upper-layer service.

## Patentansprüche

1. Kommunikationsverfahren, wobei das Verfahren auf eine Basisstation angewendet wird und das Verfahren Folgendes umfasst:
Empfangen (S301) eines Router-Bekanntgabepakets von einem Router und Generieren (S301) einer Identifizierung für ein virtuelles lokales Netzwerk, einer Schnittstellennetzwerkadresse und einer Route basierend auf dem Router-Bekanntgabepaket;
Erlangen (S302) von Zuordnungsinformationen eines Dienstes der oberen Schicht, wobei der Dienst der oberen Schicht einen Verwaltungsebenendienst, einen Steuerebenendienst und einen Benutzerebenendienst umfasst; und
Bestimmen (S303) eines virtuellen lokalen Netzwerks und einer Netzwerkadresse des Dienstes der oberen Schicht basierend auf den Zuordnungsinformationen;
wobei das Verfahren ferner Folgendes umfasst:
Herstellen einer Verwaltungskanalverbindung zwischen der Basisstation und einem Netzwerkverwaltungssystem; und
das Erlangen (S302) von Zuordnungsinformationen eines Dienstes der oberen Schicht Folgendes umfasst:
Erlangen der Zuordnungsinformationen des Dienstes der oberen Schicht von dem Netzwerkverwaltungssystem basierend auf der Verwaltungskanalverbindung;
wobei die Zuordnungsinformationen eine Benutzungsregel für ein virtuelles lokales Netzwerk für die Basisstation umfassen; und das Bestimmen (S303) eines virtuellen lokalen Netzwerks und einer Netzwerkadresse des Dienstes der oberen Schicht basierend auf den Zuordnungsinformationen Folgendes umfasst:
Bestimmen des virtuellen lokalen Netzwerks und der Netzwerkadresse des Dienstes der oberen Schicht gemäß der Benutzungsregel für ein virtuelles lokales Netzwerk für die Basisstation und basierend auf der Identifizierung für ein virtuelles lokales Netzwerk und der Schnittstellennetzwerkadresse, die im Voraus generiert werden; wobei das Generieren (S301) einer Identifizierung für ein virtuelles lokales Netzwerk, einer Schnittstellennetzwerkadresse und einer Route basierend auf dem Router-Bekanntgabepaket Folgendes umfasst:
automatisches Generieren der Identifizierung für ein virtuelles lokales Netzwerk basierend auf einer Identifizierung für ein virtuelles lokales Netzwerk des Router-Bekanntgabepakets, das über einen physischen Anschluss empfangen wird; und
automatisches Generieren einer globalen Unicast-Adresse als die Schnittstellennetzwerkadresse unter Verwendung eines zustandslosen Adress-Autokonfigurationsmechanismus des Internetprotokolls Version 6 (internet protocol version 6, IPv6), basierend auf einem Netzwerkadressenpräfix, das in dem Router-Bekanntgabepaket mitgeführt wird.

2. Verfahren gemäß Anspruch 1, wobei die Zuordnungsinformationen ferner eine Entsprechung zwischen dem Dienst der oberen Schicht und einer Schnittstelle für ein virtuelles lokales Netzwerk umfassen; und
das Bestimmen (S303) eines virtuellen lokalen Netzwerks und einer Netzwerkadresse des Dienstes der oberen Schicht basierend auf den Zuordnungsinformationen Folgendes umfasst:
Bestimmen des virtuellen lokalen Netzwerks des Dienstes der oberen Schicht gemäß der Benutzungsregel für ein virtuelles lokales Netzwerk für die Basisstation und basierend auf der im Voraus generierten Identifizierung für ein virtuelles lokales Netzwerk; und
Bestimmen einer Schnittstelle für ein virtuelles lokales Netzwerk, die dem virtuellen lokalen Netzwerk des Dienstes der oberen Schicht entspricht, basierend auf dem virtuellen lokalen Netzwerk des Dienstes der oberen Schicht und der Entsprechung zwischen dem Dienst der oberen Schicht und der Schnittstelle für ein virtuelles lokales Netzwerk, und Bestimmen der Schnittstellennetzwerkadresse, die auf der Schnittstelle für ein virtuelles lokales Netzwerk im Voraus generiert wird, als die Netzwerkadresse des Dienstes der oberen Schicht.

3. Verfahren gemäß Anspruch 1 oder 2, wobei das Herstellen einer Verwaltungskanalverbindung zwischen der Basisstation und einem Netzwerkverwaltungssystem Folgendes umfasst:
Austauschen einer Verwaltungsebenennetzwerkadresse eines Peer-Endes durch die Basisstation und das Netzwerkverwaltungssystem durch Umwandeln eines Multicast-Pakets in ein Unicast - Paket unter Verwendung eines dynamischen Hostkonfigurationsprotokoll-Relays; und
Herstellen der Verwaltungskanalverbindung zwischen der Basisstation und dem Netzwerkverwaltungssystem basierend auf der Verwaltungsebenennetzwerkadresse des Peer-Endes.

4. Verfahren gemäß Anspruch 3, wobei das Austauschen einer Verwaltungsebenennetzwerkadresse eines Peer-Endes durch die Basisstation und das Netzwerkverwaltungssystem durch Umwandeln eines Multicast-Pakets in ein Unicast - Paket unter Verwendung eines dynamischen Hostkonfigurationsprotokoll-Relays Folgendes umfasst:
Senden eines dynamischen Hostkonfigurationsprotokoll-Anforderungs-Multicast-Pakets für jede Schnittstelle für ein virtuelles lokales Netzwerk, wobei ein Optionsfeld des dynamischen Hostkonfigurationsprotokoll-Anforderungs-Multicast-Pakets eine Identifizierung für die Basisstation der Basisstation und eine Verwaltungsebenennetzwerkadresse der Basisstation mitführt und die Verwaltungsebenennetzwerkadresse der Basisstation die Schnittstellennetzwerkadresse ist, die basierend auf einem Router-Aufforderungspaket generiert wird und
die der Identifizierung für das virtuelle lokale Netzwerk entspricht.

5. Verfahren gemäß Anspruch 3, wobei das Austauschen einer Verwaltungsebenennetzwerkadresse eines Peer-Endes durch die Basisstation und das Netzwerkverwaltungssystem durch Umwandeln eines Multicast-Pakets in ein Unicast - Paket unter Verwendung eines dynamischen Hostkonfigurationsprotokoll-Relays Folgendes umfasst:
Senden eines dynamischen Hostkonfigurationsprotokoll-Anforderungs-Multicast-Pakets für jede Schnittstelle für ein virtuelles lokales Netzwerk, wobei ein Optionsfeld des dynamischen Hostkonfigurationsprotokoll-Anforderungs-Multicast-Pakets eine Identifizierung für die Basisstation mitführt; und
Empfangen eines Antwort-Multicast-Pakets, das unter Verwendung des dynamischen Hostkonfigurationsprotokoll-Relays aus einem dynamischen Hostkonfigurationsprotokoll-Antwort-Unicast-Paket umgewandelt wird, das durch das Netzwerkverwaltungssystem gesendet wird, wenn das Anforderungs-Unicast-Paket empfangen wird, wobei ein Optionsfeld des Antwort-Multicast-Pakets eine Verwaltungsebenennetzwerkadresse des Netzwerkverwaltungssystems mitführt.

6. Verfahren gemäß Anspruch 1 oder 2, wobei ein Domain-Name-System-Server-Adressfeld des Router-Bekanntgabepakets als Verwaltungsebenennetzwerkadresse des Netzwerkverwaltungssystems konfiguriert ist; und
das Herstellen einer Verwaltungskanalverbindung zwischen der Basisstation und einem Netzwerkverwaltungssystem Folgendes umfasst:
Zugreifen auf einen Domain-Name-System-Server, um die Verwaltungsebenennetzwerkadresse des Netzwerkverwaltungssystems zu erlangen; und
Herstellen der Verwaltungskanalverbindung zwischen der Basisstation und dem Netzwerkverwaltungssystem basierend auf der Verwaltungsebenennetzwerkadresse des Netzwerkverwaltungssystems.

7. Basisstation (1800), wobei die Basisstation (1800) einen Prozessor (1801) und einen Speicher (1802) umfasst, wobei der Speicher (1802) dazu konfiguriert ist, Programmcode zu speichern und den Programmcode an den Prozessor (1801) zu übertragen; und
der Prozessor (1802) dazu konfiguriert ist, gemäß Anweisungen in dem Programmcode das Verfahren gemäß einem der Ansprüche 1 bis 6 durchzuführen.

8. Kommunikationssystem, umfassend die Basisstation (1800) gemäß Anspruch 7 und ein Netzwerkverwaltungssystem (1820), wobei das Netzwerkverwaltungssystem (1820) einen Prozessor (1821) und einen Speicher (1822) umfasst, wobei
der Speicher (1822) dazu konfiguriert ist, Programmcode zu speichern und den Programmcode an den Prozessor (1821) zu übertragen; und
der Prozessor (1821) dazu konfiguriert ist, gemäß Anweisungen in dem Programmcode ein Verfahren durchzuführen, das Folgendes umfasst:
Herstellen einer Verwaltungskanalverbindung mit der Basisstation (1800); und
Liefern von Zuordnungsinformationen eines Dienstes der oberen Schicht an die Basisstation (1800) unter Verwendung der Verwaltungskanalverbindung, wobei der Dienst der oberen Schicht einen Verwaltungsebenendienst, einen Steuerebenendienst und
einen Benutzerebenendienst umfasst, und die Zuordnungsinformationen durch die Basisstation (1800) verwendet werden, um ein virtuelles lokales Netzwerk und eine Netzwerkadresse des Dienstes der oberen Schicht zu bestimmen.

## Revendications

1. Procédé de communication, dans lequel le procédé est appliqué à une station de base, et le procédé comprend :
la réception (S301) d'un paquet de signalement de routeur en provenance d'un routeur, et la génération (S301) d'un identifiant de réseau local virtuel, d'une adresse de réseau d'interface et d'un itinéraire sur la base du paquet de signalement de routeur ;
l'obtention (S302) d'informations d'association d'un service de couche supérieure, dans lequel le service de couche supérieure comprend un service de plan de gestion, un service de plan de commande et un service de plan utilisateur ; et
la détermination (S303) d'un réseau local virtuel et d'une adresse de réseau du service de couche supérieure sur la base des informations d'association ;
dans lequel le procédé comprend également :
l'établissement d'une connexion de canal de gestion entre la station de base et un système de gestion de réseau ; et
l'obtention (S302) d'informations d'association d'un service de couche supérieure comprend :
l'obtention des informations d'association du service de couche supérieure auprès du système de gestion de réseau sur la base de la connexion de canal de gestion ;
dans lequel les informations d'association comprennent une règle d'utilisation de réseau local virtuel pour la station de base ; et
la détermination (S303) d'un réseau local virtuel et d'une adresse de réseau du service de couche supérieure sur la base des informations d'association comprend :
la détermination du réseau local virtuel et de l'adresse de réseau du service de couche supérieure selon la règle d'utilisation de réseau local virtuel pour la station de base et sur la base de l'identifiant de réseau local virtuel et de l'adresse de réseau d'interface qui sont générés à l'avance ;
dans lequel la génération (S301) d'un identifiant de réseau local virtuel, d'une adresse de réseau d'interface et d'un itinéraire sur la base du paquet de signalement de routeur comprend :
la génération automatique de l'identifiant de réseau local virtuel sur la base d'un identifiant de réseau local virtuel du paquet de signalement de routeur reçu via un port physique ; et
la génération automatique d'une adresse de monodiffusion globale en tant qu'adresse de réseau d'interface à l'aide d'un mécanisme de configuration automatique d'adresse sans état de protocole Internet version 6, IPv6, sur la base d'un préfixe d'adresse de réseau transporté dans le paquet de signalement de routeur.

2. Procédé selon la revendication 1, dans lequel les informations d'association comprennent également une correspondance entre le service de couche supérieure et une interface de réseau local virtuel ; et
la détermination (S303) d'un réseau local virtuel et d'une adresse de réseau du service de couche supérieure sur la base des informations d'association comprend :
la détermination du réseau local virtuel du service de couche supérieure selon la règle d'utilisation de réseau local virtuel pour la station de base et sur la base de l'identifiant de réseau local virtuel généré à l'avance ; et
la détermination d'une interface de réseau local virtuel correspondant au réseau local virtuel du service de couche supérieure sur la base du réseau local virtuel du service de couche supérieure et de la correspondance entre le service de couche supérieure et l'interface de réseau local virtuel, et la détermination de l'adresse de réseau d'interface générée sur l'interface de réseau local virtuel en avance en tant qu'adresse de réseau du service de couche supérieure.

3. Procédé selon la revendication 1 ou 2, dans lequel l'établissement d'une connexion de canal de gestion entre la station de base et un système de gestion de réseau comprend :
l'échange, par la station de base et le système de gestion de réseau, d'une adresse de réseau de plan de gestion d'une extrémité homologue en convertissant un paquet de multidiffusion en un paquet de monodiffusion à l'aide d'un relais de protocole de configuration d'hôte dynamique ; et
l'établissement de la connexion de canal de gestion entre la station de base et le système de gestion de réseau sur la base de l'adresse de réseau de plan de gestion de l'extrémité homologue.

4. Procédé selon la revendication 3, dans lequel l'échange, par la station de base et le système de gestion de réseau, d'une adresse de réseau de plan de gestion d'une extrémité homologue en convertissant un paquet de multidiffusion en un paquet de monodiffusion à l'aide d'un relais de protocole de configuration d'hôte dynamique comprend :
l'envoi d'un paquet de multidiffusion de demande de protocole de configuration d'hôte dynamique pour chaque interface de réseau local virtuel, dans lequel un champ d'option du paquet de multidiffusion de demande de protocole de configuration d'hôte dynamique transporte un identifiant de station de base de la station de base et une adresse de réseau de plan de gestion de la station de base, et l'adresse de réseau de plan de gestion de la station de base est l'adresse de réseau d'interface générée sur la base d'un paquet de sollicitation de routeur et qui correspond à l'identifiant de réseau local virtuel.

5. Procédé selon la revendication 3, dans lequel l'échange, par la station de base et le système de gestion de réseau, d'une adresse de réseau de plan de gestion d'une extrémité homologue en convertissant un paquet de multidiffusion en un paquet de monodiffusion à l'aide d'un relais de protocole de configuration d'hôte dynamique comprend :
l'envoi d'un paquet de multidiffusion de demande de protocole de configuration d'hôte dynamique pour chaque interface de réseau local virtuel, dans lequel un champ d'option du paquet de multidiffusion de demande de protocole de configuration d'hôte dynamique transporte un identifiant de station de base ; et
la réception d'un paquet de multidiffusion de réponse converti, à l'aide du relais de protocole de configuration d'hôte dynamique, à partir d'un paquet de monodiffusion de réponse de protocole de configuration d'hôte dynamique envoyé par le système de gestion de réseau lors de la réception du paquet de monodiffusion de demande, dans lequel un champ d'option du paquet de multidiffusion de réponse transporte une adresse de réseau de plan de gestion du système de gestion de réseau.

6. Procédé selon la revendication 1 ou 2, dans lequel un champ d'adresse de serveur de système de noms de domaine du paquet de signalement de routeur est configuré en tant qu'adresse de réseau de plan de gestion du système de gestion de réseau ; et l'établissement d'une connexion de canal de gestion entre la station de base et un système de gestion de réseau comprend :
l'accès à un serveur de système de noms de domaine pour obtenir l'adresse de réseau de plan de gestion du système de gestion de réseau ; et
l'établissement de la connexion de canal de gestion entre la station de base et le système de gestion de réseau sur la base de l'adresse de réseau de plan de gestion du système de gestion de réseau.

7. Station de base (1800), dans laquelle la station de base (1800) comprend un processeur (1801) et une mémoire (1802), dans laquelle
la mémoire (1802) est configurée pour stocker le code de programme et transmettre le code de programme au processeur (1801); et
le processeur (1802) est configuré pour mettre en oeuvre, selon les instructions dans le code de programme, le procédé selon l'une quelconque des revendications 1 à 6.

8. Système de communication comprenant la station de base (1800) selon la revendication 7 et un système de gestion de réseau (1820), dans lequel le système de gestion de réseau (1820) comprend un processeur (1821) et une mémoire (1822), dans lequel la mémoire (1822) est configurée pour stocker le code de programme et transmettre le code de programme au processeur (1821); et
le processeur (1821) est configuré pour mettre en oeuvre, selon les instructions dans le code de programme, un procédé comprenant :
l'établissement d'une connexion de canal de gestion à la station de base (1800) ; et
la fourniture d'informations d'association d'un service de couche supérieure à la station de base (1800) à l'aide de la connexion de canal de gestion, dans lequel le service de couche supérieure comprend un service de plan de gestion, un service de plan de commande et un service de plan utilisateur, et les informations d'association sont utilisées par la station de base (1800) pour déterminer un réseau local virtuel et une adresse de réseau du service de couche supérieure.
